# EUROPEAN PATENT SPECIFICATION

(11) **EP 2 065 443 B1**
(45) Date of publication and mention of the grant of the patent: **01.02.2012**
(21) Application number: 07807154.5
(22) Date of filing: 12.09.2007
(51) Int. Cl.: C08L 65/00, B32B 27/18, B65D 81/26, C08K 5/098, C08L 101/00

(54) **OXYGEN-ABSORBING RESIN COMPOSITION**
SAUERSTOFFABSORBIERENDE HARZZUSAMMENSETZUNG
COMPOSITION DE RÉSINE ABSORBANT L'OXYGÈNE

(30) Priority: 12.09.2006 JP 2006246439
(43) Date of publication of application: 03.06.2009
(73) Proprietor: Kuraray Co., Ltd., Okayama 710-8622 (JP)
(72) Inventor: INUBUSHI, Yasutaka, Kurashiki-shi Okayama 710-0801 (JP); KANEHARA, Mie, Kamisu-shi Ibaraki 314-0254 (JP); HAYASHIBARA, Tatsuhiko, Kurashiki-shi Okayama 710-8622 (JP); WATANABE, Tomoyuki, Kurashiki-shi Okayama 713-8550 (JP); IWASAKI, Hideharu, Kurashiki-shi Okayama 710-0801 (JP)
(74) Representative: Vossius & Partner
(86) International application number: PCT/JP2007/067747
(87) International publication number: WO 2008/032743

(56) References cited:
- EP-A1- 1 538 176
- WO-A1-94/07944
- JP-A- 2001 031 760
- JP-A- 2001 508 742
- JP-A- 2003 253 131
- JP-A- 2003 504 042
- JP-A- 2005 187 808
- JP-A- 2006 206 744
- DATABASE WPI Week 200426 Thomson Scientific, London, GB; AN 2004-272621 XP002607338, -& JP 2003 253131 A (TOPPAN PRINTING CO LTD) 10 September 2003 (2003-09-10)

## Description

The present invention relates to an oxygen-absorbing resin composition for use in packaging materials, containers and the like for articles, in particular, foods, drinks, pharmaceutical products, cosmetics and the like, that are highly susceptible to and easily degradable by oxygen. Furthermore, the present invention relates to a molded product in which such an oxygen-absorbing resin composition is used.

Gas barrier resins such as ethylene-vinyl alcohol copolymer (hereinafter sometimes abbreviated as EVOH) are materials having excellent oxygen barrier properties and carbon dioxide barrier properties. Such a resin can be melt-molded and therefore is used preferably for a multilayered packaging material having a layer of the resin laminated with a layer made of a thermoplastic resin (polyolefin, polyester, etc.) having excellent moisture-resistance, mechanical properties and the like. However, gas permeation through such gas barrier resins is not completely zero, and such gas barrier resins transmit gas in an amount that cannot be ignored. It is known to use an oxygen absorbent by blending in a packaging material in order to reduce the transmission of such gas, in particular, oxygen, which significantly affects the quality of the content of a package, in particular, a food, or in order to remove oxygen that is already present inside a package at the time of packaging its content by absorbing oxygen.

For example, as an ingredient suitable for oxygen absorption, a composition containing an ethylenically unsaturated hydrocarbon and a transition metal catalyst has been proposed (see Patent Document 1). Furthermore, resin compositions containing EVOH and an oxygen absorbent have been proposed (see Patent Document 2, Patent Document 3 and Patent Document 4). In particular, similar to EVOH, the resin compositions containing EVOH can be melt-molded and therefore can be used preferably for various packaging materials.

However, when the packaging material or the resin composition that contains an oxygen absorbent is used as a packaging material, the oxygen absorbent is decomposed as oxygen absorption proceeds, and an unpleasant odor may be generated. Therefore, there are demands for a further improvement for applications in which odorlessness is required.

Some present inventors conducted extensive research to address the problem described above, and as a result, have arrived at the invention of an oxygen-absorbing resin composition that does not generate an unpleasant odor and that contains a transition metal salt and a thermoplastic resin having carbon-carbon double bonds substantially only in the main chain (see Patent Document 5). However, when contents, food in particular, are stored for a long period of time, a packaging material is desirable that an oxygen absorption amount is as more as possible, and therefore a further enhancement of the oxygen absorbency of an oxygen-absorbing resin composition to be used is required. For that purpose, one method is to increase portions to be oxidized in an oxygen-absorbing resin composition. That is, the amount of carbon-carbon double bonds is increased to raise the density of allylic positions (i.e., positions of carbon adjacent to carbon-carbon double bonds) that are considered as portions to be oxidized which are relatively highly reactive in the main chain, and thus to increase the reactive sites for absorbing oxygen. However, materials having many carbon-carbon double bonds are problematic in being generally inferior in stability and processability during melt-molding and being likely to be colored or generate aggregation. Therefore, it is not sufficient just to increase carbon-carbon double bonds in materials used for compositions in order to enhance oxygen absorbency.

Moreover, in the field of food packaging, immediate removal of oxygen remaining inside a package may be required to further improve a shelf life. In this case, it is required to attain not only high oxygen absorbency but a high oxygen absorption rate within a short period of time during the initial stage.

As a method to increase such an initial oxygen absorption rate, one possibility is to enhance the dispersion of an oxygen-absorbing resin composition contained in the base resin. However, even when the dispersion is enhanced by, for example, adding a compatibilizer so as to reduce the average particle size of the particles dispersed within the oxygen-absorbing resin composition, the initial oxygen absorption rate is not always increased so much.

Furthermore, good appearances are important in food packaging materials, and increased transparency is required for oxygen-absorbing packaging materials as compared with conventional products.

Ring-opening methathesis polymers of cycloolefins of norbornene type have carbon-carbon double bonds in the main chain and generally have good transparency and therefore have potential as materials for use as polymers that compose the aforementioned oxygen-absorbing resin composition. In this field, known examples are (1) an oxygen impermeable resin in which a polycondensation polymer segment and an olefin oligomer segment having a carbon-carbon unsaturated bond such as a norbornene oligomer segment or dicyclopentadiene oligomer segment are bonded to the main chain in a block-like manner, and this resin may contain a transition metal compound as necessary (see Patent Document 6), (2) an oxygen barrier polymer in which an olefin oligomer segment having a carbon-carbon unsaturated bond such as a norbornene oligomer segment or dicyclopentadiene oligomer segment is bonded in a branched manner to the main chain of an oxygen barrier addition polymer such as EVOH, and this resin may contain a transition metal compound as necessary (see Patent Document 7), (3) a container containing a deoxidant composed of a transition metal catalyst and an ethylenically unsaturated hydrocarbon including a polymer or copolymer derived from dicyclopentadiene, norbornadiene, 5-ethylidene-2-norbornene or the like (see Patent Document 8) and (4) an oxygen absorbent composed of an N-hydroxyimide compound and an oxidizable polymer including a ring-opening methathesis polymer of a cycloolefin such as norbornene (see Patent Document 9). However, in these prior arts, no enhancement of an initial oxygen absorption rate is discussed.

Furthermore, disclosed is (5) a composition containing a (co)polymer having oxygen-trapping properties that is composed of at least one type of (a) an ethylene or substituted ethylene unit and one type of (b) an unsubstituted or substituted cycloolefin compound unit (see Patent Document 10). The compositions described in the examples, however, are all hydrogenated polymers such as hydrogenated polynorbornene and are compositions of a different technical concept from the viewpoint of giving a role to a carbon-carbon double bond. Thus, there is no disclosure of the enhancement of an initial oxygen absorption rate.

Moreover, there is disclosed (6) a ring-opening polymer composition that is produced by introducing a specific metal salt as a filler into a ring-opening methathesis polymer of a norbornene derivative having a carboxyl group or ester group at the 4 position (see Patent Document 11). The object of this prior art, since the polymer obtained by the ring-opening methathesis of a norbornene derivative is regarded as an engineering plastic, is to improve the mechanical properties thereof, and there is no disclosure of oxygen absorbing properties. Furthermore, (7) a method for producing a filler-containing cycloolefin polymer molded product by employing ring-opening methathesis using as a starting material a cycloolefin of norbornene type such as norbornene or dicyclopentadiene is known (see Patent Document 12). The resulting molded product, however, is not for oxygen absorption, and no such issue is discussed.
Patent Document 1: Japanese Laid-Open Patent Publication No. 5-115776
Patent Document 2: Japanese Laid-Open Patent Publication No. 2001-106866
Patent Document 3: Japanese Laid-Open Patent Publication No. 2001-106920
Patent Document 4: Japanese Laid-Open Patent Publication No. 2002-146217
Patent Document 5: Japanese Laid-Open Patent Publication No. 2005-187808
Patent Document 6: Japanese Laid-Open Patent Publication No. 2001-31760
Patent Document 7: Japanese Laid-Open Patent Publication No. 2001-31768
Patent Document 8: Japanese National Patent Publication No. 2005-502547
Patent Document 9: International Publication No. WO 2005/010101
Patent Document 10: Japanese Laid-Open Patent Publication No. 2006-206744
Patent Document 11: Japanese Laid-Open Patent Publication No. 59-51940
Patent Document 12: Japanese Laid-Open Patent Publication. No. 11-322903

An object of the present invention is to address the problems described above and to provide an oxygen-absorbing resin composition that has excellent oxygen absorbency, does not generate an unpleasant odor as a result of oxygen absorption, has a high initial oxygen absorption rate, in particular, a high initial oxygen absorption rate per carbon-carbon double bond, and has excellent transparency. Another object of the present invention is to provide an oxygen-absorbing resin composition useful as an easy-to-handle deoxidant. Yet another object of the present invention is to provide a molded product containing the oxygen-absorbing resin composition. Yet another object of the present invention is to provide a container suitable for storing products such as foods that are susceptible to degradation by oxygen, such as a multilayered film or multilayered container having a layer made of the oxygen-absorbing resin composition.

Accordingly, the present invention is directed to an oxygen-absorbing resin composition containing a thermoplastic resin (4) having a structural unit represented by formula (I) below and a transition metal salt (B): 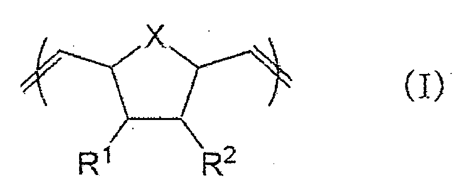 wherein X is a methylene group or an oxygen atom, R¹ and R² each independently represent a hydrogen atom, an alkyl group that may be substituted, an alkenyl group that may be substituted, an aryl group that may be substituted, an alkylaryl group that may be substituted, -OCOR³ (R³ represents a hydrogen atom or an alkyl group having 1 to 10 carbon atoms), a cyano group or a halogen atom, or R¹ and R² are taken together to form a single bond, an alkylene group that may be substituted, an oxyalkylene group or an alkenylene group.

In one preferred embodiment of the present invention, the thermoplastic resin (A) is polynorbornene, and the transition metal salt (B) is at least one metal salt selected from the group consisting of an iron salt, a nickel salt, a copper salt, a manganese salt and a cobalt salt.

Moreover, in a more preferred embodiment of the present invention, the oxygen-absorbing resin composition may further contain a matrix resin (C), the particles of the thermoplastic resin (A) are dispersed preferably in an average particle diameter of 4 µm or less in the matrix of the matrix resin (C), and the thermoplastic resin (A) is contained in a ratio of 30 to 1 wt% and the matrix resin (C) is contained in a ratio of 70 to 99 wt% when the total weight of the thermoplastic resin (A) and the matrix resin (C) is determined to be 100 wt%. Moreover, the matrix resin (C) is preferably a gas barrier resin (C-1) having an oxygen transmission rate of 500 ml·20 µm/m²·day·atm (20°C, 65%RH) or less, and in particular, preferably an ethylene-vinyl alcohol copolymer having an ethylene content of 5 to 60 mol% and a degree of saponification of 90% or more.

In a more preferable embodiment of the present invention, the oxygen-absorbing resin composition further contains a compatibilizer (D), and the thermoplastic resin (A) is contained in a ratio of 29.9 to 1 wt%, the matrix resin (C) is contained in a ratio of 70 to 98.9 wt% and the compatibilizer (D) is contained in a ratio of 29 to 0.1 wt% when the total weight of the thermoplastic resin (A), the matrix resin (C) and the compatibilizer (D) is determined to be 100 wt%.

Furthermore, the present invention is directed to a molded product containing the oxygen-absorbing resin composition, and one preferred embodiment includes a gasket for a container cap. Such a cap furnished with a gasket is also encompassed within the present invention.

In addition, the present invention is directed to a multilayered structure having a layer made of the oxygen-absorbing resin composition, and a preferable embodiment includes a multilayered container, in particular a multilayered container having a thermoplastic polyester layer, or a multilayered film having a total thickness of 300 µm or less.

According to the present invention, an oxygen-absorbing resin composition that has excellent oxygen absorbency, does not generate an unpleasant odor as a result of oxygen absorption and has an excellent initial oxygen absorption rate and excellent transparency, and a molded product containing the oxygen-absorbing resin composition, for example, a multilayered film, multilayered container and the like having a layer made of the resin composition can be obtained. In particular, containers containing the resin composition are of use for storing products such as foods and cosmetics that are susceptible to degradation by oxygen and whose flavor is important. According to the present invention, an oxygen-absorbing resin composition useful also as an easy-to-handle deoxidant can be obtained.

### (1) Thermoplastic resin (A)

The oxygen-absorbing resin composition of the present invention contains a thermoplastic resin (A) having a structural unit represented by formula (I) (hereinafter referred to as the thermoplastic resin (A)): 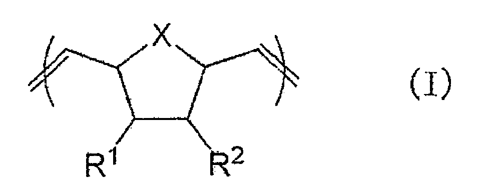 wherein X is a methylene group or an oxygen atom, R¹ and R² each independently represent a hydrogen atom, an alkyl group that may be substituted, an alkenyl group that may be substituted, an aryl group that may be substituted, an alkylaryl group that may be substituted, -OCOR³ (R³ represents a hydrogen atom or an alkyl group having 1 to 10 carbon atoms), a cyano group or a halogen atom, or R¹ and R² are taken together to form a single bond, an alkylene group that may be substituted, an oxyalkylene group or an alkenylene group.

The number of carbon atoms of the alkyl group is preferably 1 to 5. The number of carbon atoms of the aryl group is preferably 6 to 10. The number of carbon atoms of the alkylaryl group is preferably 7 to 11. Examples of the alkyl group include a methyl group, an ethyl group, a propyl group and a butyl group. An example of the aryl group is a phenyl group. An example of the alkylaryl group is a benzyl group. An example of the halogen atom is a chlorine atom.

The number of carbon atoms of the aforementioned alkylene group, oxyalkylene group and alkenylene group is preferably 1 to 10 and more preferably 2 to 5.

The thermoplastic resin (A) may contain various hydrophilic groups. "Hydrophilic groups" as used herein refer to a hydroxyl group, an alkoxy group having 1 to 10 carbon atoms, an amino group, an aldehyde group, a carboxyl group, an epoxy group, an ester group, a carboxylic acid anhydride group, a boron-containing polar group (e.g., a boronic acid group, a boronic ester group, a boronic anhydride group and a boronate group) and the like. These groups may be present at any position of the thermoplastic resin (A).

For the thermoplastic resin (A), the ring-opening methathesis polymers of norbornene, norbornadiene, oxynorbornene, dicyclopentadiene and the like are preferable for the ease of industrially production. Among these examples, a ring-opening methathesis polymer of norbornene (hereinafter simply referred to as polynorbornene) is particularly preferable because of ease in availability and production and its excellent oxygen absorbing function.

Since the thermoplastic resin (A) has carbon-carbon double bonds within its structural unit, the thermoplastic resin (A) can efficiently react with oxygen, and as a result, oxygen absorbing function can be obtained. The term "carbon-carbon double bonds" used herein does not encompas the double bonds contained in an aromatic ring.

The amount of carbon-carbon double bond contained in the thermoplastic resin (A) is preferably 0.001 to 0.018 mol/g, more preferably 0.005 to 0.014 mol/g and even more preferably 0.007 to 0.012 mol/g. When the amount of carbon-carbon double bond is less than 0.001 mol/g, the oxygen absorbing function of the resultant oxygen-absorbing resin composition tends to be insufficient. When the amount exceeds 0.018 mol/g, an oxygen-absorbing resin composition containing the thermoplastic resin (A) tends to be colored or aggregated when molded in conjunction with another resin.

In the structural unit of formula (I) that the thermoplastic resin (A) has, carbon-carbon double bonds are present in the main chain of the polymer. Therefore, even when carbon-carbon double bonds or allyl carbon sites thereof are partially oxidized or cleaved by reaction with oxygen, a low molecular weight fragment is not likely to be generated unlike the cleavage of carbon-carbon double bonds in a side chain, and thus an unpleasant odorous substance is unlikely to be generated.

Moreover, a feature of the structural unit of formula (I) is having a cyclic structure a part of which constitutes the main chain. Due to this cyclic structure, the oxygen-absorbing resin composition containing the thermoplastic resin (A) can attain an excellent initial oxygen absorption rate and superior transparency.

The weight average molecular weight (Mw) of the thermoplastic resin (A) is preferably 10000 to 250000 and more preferably 40000 to 200000. When the weight average molecular weight (Mw) of the thermoplastic resin (A) is less than 10000 or more than 500000, the mold-processability and handling properties of the resultant oxygen-absorbing resin composition may be poor, and mechanical properties such as strength or elongation may be poor when processed into a molded product. Furthermore, when the thermoplastic resin (A) is mixed with a matrix resin (C) that will be described below, the dispersibility of the thermoplastic resin (A) is lowered. As a result, oxygen absorbing function is lowered and the properties of the matrix resin (C) may not be sufficiently exhibited (for example, gas barrier properties is insufficient).

For a method for producing the thermoplastic resin (A), polynorbornene, for example, can be produced according to a method in which ring-opening methathesis polymerization is performed using norbornene as a starting material and a tungsten or ruthenium complex as a catalyst. Specifically, for example, [1,3-bis-(2,4,6-trimethylphenyl)-2-imidazolidinylidene]dichloro(phenylmethylene) (tricyclohexylphosphine)ruthenium can be used as a catalyst. Ring-opening methathesis polymerization can be performed in the absence or presence of a solvent, and it is preferable to carry out ring-opening methathesis polymerization in the presence of a solvent. Solvents that can be used in the method are not particularly limited insofar as they are inert to the ring-opening methathesis polymerization, and examples include aliphatic hydrocarbons such as hexane, heptane, octane, nonane, decane, undecane and dodecane; aromatic hydrocarbons such as toluene, benzene and xylene: ethers such as tetrahydrofuran; and halogenated hydrocarbons such as methylene chloride. When a solvent is used, the amount thereof to be used is not particularly limited, and usually in the range of 1 to 1000 times by weight, preferably 2 to 200 times by weight and more preferably 3 to 100 times by weight relative to the starting materials. The ring-opening metathesis polymerization may be performed usually at a temperature ranging from -78 to 200°C usually for 72 hours or less, although these parameters may vary depending on the use of a solvent, the boiling point of a solvent if used and like factors.

In the present invention, the thermoplastic resin (A) may contain an antioxidant. Examples of antioxidants include 2,5-di-tert-butyihydroquinone, 2,6-di-tert-butyl-p-cresol, 4,4'-thiobis(6-tert-butylphenol), 2,2'-methylenebis(4-methyl-6-tert-butylphenol), octadecyl-3-(3',5'-di-tert-butyl-4'-hydroxyphenyl)propionate, 4,4'-thiobis-(6-tert-butylphenol), 2-tert-butyl-6-(3-tert-butyl-2-hydroxy-5-methylbenzyl)-4-methylphenylacrylate, pentaerythritol tetrakis(3-laurylthiopropionate), 2,6-di-tert-butyl-4-methylphenol, 2,2-methylenebis-(6-tert-butyl-p-cresol), triphenyl phosphite, tris(nonylphenyl)phosphite and dilauryl thiodipropionate.

When an antioxidant is contained in the thermoplastic resin (A), the amount thereof is determined as appropriate in view of the kind and amount of each component of the oxygen-absorbing resin composition of the present invention and the purpose of use and the storage conditions of the oxygen-absorbing resin composition of the present invention, and like factors. For example, in the case where the thermoplastic resin (A) is stored at a relatively low temperature or in an inert gas atmosphere, or in the case where the oxygen-absorbing resin composition of the present invention is produced by melt-kneading in a sealing with nitrogen, the amount of antioxidant to be added can be small. In the case where a transition metal salt (B) as described below is added in a relatively large amount, an oxygen-absorbing resin composition having good oxygen absorbing function can be obtained even when the thermoplastic resin (A) contains a relatively large amount of antioxidant. Usually, the amount of antioxidant to be contained is preferably in a ratio of 0.01 to 1 wt%, more preferably 0.02 to 0.5 wt% and even more preferably 0.03 to 0.3 wt% of the total weight of the thermoplastic resin (A) and the antioxidant. When the amount of antioxidant exceeds 1 wt%, the reaction of the thermoplastic resin (A) and oxygen is inhibited, so that the oxygen absorbing function of the oxygen-absorbing resin composition of the present invention sometimes may be insufficient. On the other hand, when the amount of antioxidant is less than 0.01 wt%, oxygen absorption may proceed during storage or melt-kneading of the thermoplastic resin (A), so that the oxygen absorbing function of the resin composition sometimes may be impaired before the resin composition is actually put to use.

### (2) Transition metal salt (B)

Examples of transition metals contained in the transition metal salt (B) include iron, nickel, copper, manganese, cobalt, rhodium, titanium, chromium, vanadium and ruthenium. Among these metals, iron, nickel, copper, manganese and cobalt are preferable, with manganese and cobalt being more preferable, and cobalt being even more preferable.

An example of counter ions for the transition metals contained in the transition metal salt (B) is preferably an anion derived from an organic acid. Examples of the organic acid include acetic acid, stearic acid, dimethyldithiocarbamic acid, palmitic acid, 2-ethylhexanoic acid, neodecanoic acid, linoleic acid, tallic acid, oleic acid, capric acid and naphthenic acid. Cobalt 2-ethylhexanoate, cobalt neodecanoate and cobalt stearate are particularly preferable as the transition metal salt. (B).

The transition metal salt (B) is contained preferably in a range of 1 to 50000 ppm, more preferably 5 to 10000 ppm and even more preferably 10 to 5000 ppm, in terms of transition metal with respect to the weight of the thermoplastic resin (A). When the oxygen-absorbing resin composition of the present invention contains a matrix resin (C) in addition to the thermoplastic resin (A) as described below, the transition metal salt (B) is contained in a range of 1 to 50000 ppm, more preferably 5 to 10000 ppm and even more preferably 10 to 5000 ppm in terms of transition metal with respect to the total amount of the thermoplastic resin (A) and the matrix resin (C). Moreover, when the oxygen-absorbing resin composition of the present invention contains a matrix resin (C) and a compatibilizer (D) in addition to the thermoplastic resin (4) as described below, the transition metal salt (B) is contained in a range of 1 to 50000 ppm, more preferably 5 to 10000 ppm and even more preferably 10 to 5000 ppm in terms of transition metal with respect to the total amount of the thermoplastic resin (A), the matrix resin (C) and the compatibilizer (D). If the content of the transition metal salt (B) is less than 1 ppm in terms of transition metal, the oxygen absorbing function of the resultant oxygen-absorbing resin composition may be insufficient. On the other hand, if the content is more than 50000 ppm, the thermal stability of the resultant oxygen-absorbing resin composition may be degraded, and significant amount of gels or aggregates may be generated.

### (3) Matrix resin (C)

A matrix resin (C) is contained as necessary in the oxygen-absorbing resin composition of the present invention. The matrix resin (C) serves as a support to dilute or disperse the thermoplastic resin (A) and has a function to provide the properties of the matrix resin (C) to the oxygen-absorbing resin composition of the present invention. The matrix resin (C) to be contained can be selected as appropariate according to the purpose of use of the oxygen-absorbing resin composition of the present invention. For example, when gas barrier properties are to be provided to the oxygen-absorbing resin composition of the present invention, a gas barrier resin is used as the matrix resin (C). When other functions are to be provided, a suitable resin is selected from resins that will be described below according to the purpose. For example, when the oxygen-absorbing resin composition of the present invention containing a gas barrier resin is processed into a molded product such as a container, this gas barrier resin functions to control the transfer of oxygen from outside through the molded product.

Among the matrix resins (C), a resin having gas barrier properties, i.e., an oxygen transmission rate of 500 ml·20 µm/m²·day·atm or less (20°C, 65%RH) is preferably used as a gas barrier resin (hereinafter referred to as a gas barrier resin (C-1)). This oxygen transmission rate means that the volume of oxygen transmitted through a film having an area of 1 m² and a thickness of 20 µm per day under a differential pressure of oxygen of 1 atm is 500 ml or less when measurement is performed in a relative humidity of 65% at a temperature of 20°C. If a resin having an oxygen transmission rate of more than 500 ml·20 µm/m²·day·atm is employed, the gas barrier properties of the resultant oxygen-absorbing resin composition may be insufficient. The oxygen transmission rate of the gas barrier resin (C-1) is more preferably 100 ml·20 µm/m²·day·atm or less, even more preferably 20 ml·20 µm/m²·day·atm or less and most preferably 5 ml·20 µm/m²·day·atm or less. Such a gas barrier resin (C-1) and the thermoplastic resin (A) are contained, so that oxygen absorbing function is exhibited in addition to the gas barrier properties, and consequently an oxygen-absorbing resin composition having significantly high gas barrier properties can be obtained.

Typical examples of the above-described gas barrier resin (C-1) include a polyvinyl alcohol resin. (C-1-1), a polyamide resin (C-1-2), a polyvinyl chloride resin (C-1-3) and a polyacrylonitrile resin (C-1-4).

As the gas barrier resin (C-1), one of these resins can be used or two or more can be used in combination. Among the resins described above, a polyvinyl alcohol resin (C-1-1) is preferable and EVOH having an ethylene content of 5 to 60 mol% and a degree of saponification of 90% or more is further preferable as the gas barrier resin (C-1).

Among the gas barrier resins (C-1), a polyvinyl alcohol resin (C-1-1) can be obtained by saponifying a vinyl ester homopolymer or a copolymer of a vinyl ester and another monomer (in particular, a copolymer of a vinyl ester and ethylene) using an alkaline catalyst or the like. The vinyl ester may be vinyl acetate, but other fatty acid vinyl esters such as vinyl propionate and vinyl pivalate can also be used.

The degree of saponification of the vinyl ester component of the polyvinyl alcohol resin (C-1-1) is preferably 90% or more, more preferably 95% or more and even more preferably 96% or more. If the degree of saponification is less than 90%, the gas barrier properties under high humidity may be impaired. When the polyvinyl alcohol resin (C-1-1) is an ethylene-vinyl alcohol copolymer (hereinafter referred to as EVOH) in particular, the thermal stability is insufficient if the degree of saponification is 90 % or less, and the resultant molded product tends to contain gels and aggregates.

Among the polyvinyl alcohol resins (C-1-1), EVOH is preferable because the melt-molding is possible and its gas barrier properties under high humidity are good.

The ethylene content of EVOH is preferably in the range of 5 to 60 mol%. If the ethylene content is less than 5 mol%, the gas barrier properties under high humidity may be poor and the melt moldability may be impaired. The ethylene content of EVOH is preferably 10 mol% or more, more preferably 15 mol% or more and even more preferably 20 mol% or more. On the other hand, if the ethylene content exceeds 60 mol%, sufficiently good gas barrier properties may not be obtained. The ethylene content is preferably 55 mol% or less and more preferably 50 mol% or less.

Preferable EVOH has an ethylene content of 5 to 60 mol% and a degree of saponification of 90% or more as described above. When a multilayered container having a layer made of the oxygen-absorbing resin composition of the present invention is desired to have excellent impact delamination resistance, it is preferable to employ EVOH having an ethylene content of 25 mol% or more and 55 mol% or less and a degree of saponification of 90% or more and less than 99%.

When a multilayered container is desired to have higher and balanced impact delamination resistance and gas barrier properties, it is preferable for use to blend an EVOH (C-1-1a) having an ethylene content of 25 mol% or more and 55 mol% or less and a degree of saponification of 90% or more and less than 99% with an EVOH (C-1-1b) having an ethylene content of 25 mol% or more and 55 mol% or less and a degree of saponification of 99% or more at a blend weight ratio (C-1-1a)/(C-1-1b) of 5/95 to 95/5. When EVOH is a blend of at least two kinds of EVOH having different ethylene contents, the average value calculated based on the blend weight ratio is determined as the ethylene content of the blend.

The ethylene content and the degree of saponification of EVOH can be determined by nuclear magnetic resonance (NMR).

The EVOH can contain a small amount of a monomer unit other than the ethylene unit and the vinyl alcohol unit as a copolymer unit within a range such that the objects of the present invention are not interfered. Examples of such monomers include the following compounds: α-olefins such as propylene, 1-butene, isobutene, 4-methyl-1-pentene, 1-hexene and 1-octene; unsaturated carboxylic acids such as itaconic acid, methacrylic acid, acrylic acid and maleic anhydride, and salts, partial or complete esters, nitriles, amides and anhydrides thereof vinylsilane compounds such as vinyltrimethoxysilane, vinyltriethoxysilane, vinyltri(β-methoxyethoxy) silane and Y-methacrylopropyltrimethoxysilane; unsaturated sulfonic acids and salts thereof; alkylthiols; and vinylpyrrolidones.

In particular, when the EVOH contains a vinylsilane compound as a copolymerized component in an amount of 0.0002 to 0.2 mol% and when the oxygen-absorbing composition of the present invention containing the EVOH is formed into a multilayered structure together with a resin that is to serve as a base resin (e.g., polyester) by coextrusion molding or coinjection molding, the consistency in melt viscosity of the EVOH with the base resin is improved, so that a uniformly molded product can be produced. As vinylsilane compounds, vinyltrimethoxysilane and vinyltriethoxysilane can be preferably used.

Furthermore, EVOH containing a boron compound is also effective in improving the melt viscosity of the EVOH, so that uniformly molded products can be obtained by coextrusion or coinjection. Here, examples of boron compounds include boric acids such as orthoboric acid, metaboric acid and tetraboric acid, boric esters such as triethyl borate and trimethyl borate, borates such as alkali metal salts and alkaline-earth metal salts of the above-described boric acids and borax, and boron hydrides such as sodium borohydride, etc. Among these compounds, orthoboric acid is preferable.

If EVOH contains a boron compound, the content of boron compound is preferably in the range of 20 to 2000 ppm and more preferably 50 to 1000 ppm in terms of boron element. With a boron compound being contained within this range, EVOH with which torque variations during melting by heating is suppressed can be obtained. If the content of boron compound is less than 20 ppm, this effect is minimal. On the other hand, if the content of boron compound exceeds 2000 ppm, gelation tends to occur, resulting in poor moldability.

It is also effective to add an alkali metal salt to the EVOH in order to improve interlayer adhesion and compatibility. The amount of alkali metal salt added is preferably in the range of 5 to 5000 ppm, more preferably 20 to 1000 ppm and even more preferably 30 to 500 ppm in terms of alkali metal element. Examples of the alkali metal salt include aliphatic carboxylates, aromatic carboxylates, phosphates and metal complexes of alkali metals such as lithium, sodium and potassium. For example, they include sodium acetate, potassium acetate, sodium phosphate, lithium phosphate, sodium stearate, potassium stearate and a sodium salt of ethylenediaminetetraacetate, and among these, sodium acetate, potassium acetate and sodium phosphate are preferable.

It is also effective to add a phosphate compound to the EVOH for improving thermal stability. The amount of phosphate compound added is preferably 20 to 500 ppm, more preferably 30 to 300 ppm and even more preferably 50 to 200 ppm in terms of phosphoric acid radicals. With a phosphate compound being blended with EVOH within the above-described range, generation of gels or aggregates and coloring can be suppressed particularly when melt molding is carried out for a long period of time.

There is no particular limitation regarding the kinds of phosphate compound added to the EVOH, and various kinds of acids such as phosphoric acid and phosphorous acid and salts thereof can be used. Phosphates may be in the form of primary phosphates, secondary phosphates or tertiary phosphates. There is no particular limitation regarding the cationic species of phosphates, but cationic species are preferably alkali metals and alkaline-earth metals. In particular, it is preferable to add the phosphate compound in the form of sodium dihydrogenphosphate, potassium dihydrogenphosphate, disodium hydrogenphosphate or dipotassium hydrogenphosphate.

A preferable melt flow rate (MFR) of the EVOH (210°C, 2160 g load, according to JIS K7210) is in the range of 0.1 to 100 g/10 min, more preferably 0.5 to 50 g/10 min and even more preferably 1 to 30 g/10 min.

Among the gas barrier resin (C-1), the kind of the polyamide resin (C-1-2) is not particularly limited. Examples thereof include aliphatic polyamide homopolymers such as polycaprolactam (Nylon-6), polyundecanamide (Nylon-11), polylaurolactam (Nylon-12), polyhexamethyleneadipamide (Nylon-6,6) and polyhexamethylenesebacamide (nylon-6,10); aliphatic polyamide copolymers such as a caprolactam/laurolactam copolymer (Nylon-6/12), a caprolactam/aminoundecanoic acid copolymer (Nylon-6/11), a caprolactam/ω-aminononanoic acid copolymer (Nylon-6/9), a caprolactam/hexamethylene adipamide copolymer (Nylon-6/6,6) and a caprolactam/hexamethylene adipamide/hexamethylene sebacamide copolymer (Nylon-6/6,6/6,10); and aromatic polyamides such as polymetaxylylene adipamide (MX-Nylon) and a hexamethylene terephthalamide/hexamethylene isophthalamide copolymer (Nylon-6T/6I). These polyamide resins (C-1-2) can be used alone or in a combination of two or more. Among these, polycaprolactam (Nylon-6) and polyhexamethylene adipamide (Nylon-6,6) are preferable in view of gas barrier properties.

Examples of the polyvinyl chloride resins (C-1-3) include homopolymers such as vinyl chloride homopolymer and vinylidene chloride homopolymer and a copolymer containing vinyl chloride or vinylidene chloride and further containing vinyl acetate, a maleic acid derivative, a higher alkyl vinyl ether, or the like.

Examples of the polyacrylonitrile resins (C-1-4) include an acrylonitrile homopolymer and copolymers of acrylonitrile and an acrylic ester or the like.

For resins other than the gas barrier resin (C-1) among the matrix resins (C), those that have desired properties are suitably selected as described above according to the purpose. Examples of such resins include the following resins: polyolefins such as polyethylene, polypropylene, ethylene-propylene copolymer, a copolymer containing ethylene or propylene (a copolymer of ethylene or propylene and at least one of the following monomers: α-olefins such as 1-butene, isobutene, 4-methyl-1-pentene, 1-hexene and 1-octene; unsaturated carboxylic acids such as itaconic acid, methacrylic acid, acrylic acid and maleic anhydride, and salts, partial or complete esters, nitriles, amides and anhydrides thereof; vinyl carboxylates such as vinyl formate, vinyl acetate, vinyl propionate, vinyl butylate, vinyl octanoate, vinyl dodecanoate, vinyl stearate and vinyl arachidonate; vinylsilane compounds such as vinyltrimethoxysilane; unsaturated sulfonic acids and salts thereof; alkylthiols; vinyl pyrrolidones; and the like), poly(4-methyl-1-pentene), poly(1-butene) and the like; polyesters such as poly(ethylene terephthalate), poly(butylene terephthalate) and poly(ethylene naphthalate); polystyrene; polycarbonate; and polyacrylates such as polymethylmethacrylate. Among the above-described resins, polyolefins such as polyethylene and polypropylene can be preferably used in view of moldability of the oxygen-absorbing resin composition of the present invention.

When the oxygen-absorbing resin composition of the present invention contains the matrix resin (C) as a resin component in addition to the thermoplastic resin (A), it is preferable to contain the thermoplastic resin (A) in a ratio of 30 to 1 wt% and to contain the matrix resin (C) in a ratio of 70 to 99 wt%, when the total weight of the thermoplastic resin (A) and the matrix resin (C) is determined to be 100 wt%. For example, when the matrix resin (C) is a gas barrier resin (C-1) and when the content of the matrix resin is less than 70 wt%, the gas barrier properties against oxygen or carbon dioxide may deteriorate. On the other hand, when the content of the matrix resin exceeds 99 wt%, the oxygen absorbing function may deteriorate. The content of the thermoplastic resin (A) is more preferably in the range of 20 to 2 wt% even more preferably 15 to 3 wt%, and the content of the matrix resin (C) is more preferably in the range of 80 to 98 wt% and even more preferably 85 to 97 wt%.

### (4) Compatibilizer (D)

The compatibilizer (D) is contained, if necessary, for the purpose of improving the compatibility of resins and allowing the resultant oxygen-absorbing resin composition to provide a stable morphology when the thermoplastic resin (A) and the matrix resin (C) are contained, or when another thermoplastic resin (E) which will be described later is further contained, in the oxygen-absorbing resin composition of the present invention. There is no particular limitation regarding the kind of compatibilizer (D), and a compatibilizer can be selected as appropriate according to the combination of the thermoplastic resin (A), the matrix resin (C) and the like that are to be used.

For example, when the matrix resin (C) is a highly polar resin such as a polyvinyl alcohol resin (C-1-1), the compatibilizer (D) is preferably a hydrocarbon polymer containing a polar group. When the compatibilizer (D) is a hydrocarbon polymer containing a polar group, a polyhydrocarbon moiety in the polymer, the moiety accounting for the main portion, enhances the affinity between the compatibilizer (D) and the thermoplastic resin (A). Moreover, due to the polar group of the compatibilizer (D), the affinity between the compatibilizer (D) and the matrix resin (C) is improved. As a result, the resultant oxygen-absorbing resin composition can be provided with stable morphology.

Examples of monomers that can form the polyhydrocarbon moiety that accounts for the main portion of the hydrocarbon polymer containing a polar group include the following: α-olefins such as ethylene, propylene, 1-butene, isobutene, 3-methylpentene, 1-hexene and 1-octene; styrenes such as styrene, α-methylstyrene, 2-methylstyrene, 4-methylstyrene, 4-propylstyrene, 4-tert-butylstyrene, 4-cyclohexylstyrene, 4-dodecylstyrene, 2-ethyl-4-benzylstyrene, 4-(phenylbutyl)styrene, 2,4,6-trimethylstyrene, monofluorostyrene, difluorostyrene, monochlorostyrene, dichlorostyrene, methoxystyrene and tert-buthoxystyrene; vinylnaphthalenes such as 1-vinylnaphthalene and 2-vinylnaphthalene; and conjugated diene compounds such as butadiene, isoprene, 2,3-dimethylbutadiene, 1,3-pentadiene and 1,3-hexadiene. One of these monomers may singly contribute to the formation of the polyhydrocarbon moiety, or two or more monomers in combination may contribute to the formation of the polyhydrocarbon moiety.

A monomer as described above forms a polyhydrocarbon moiety corresponding to one of the following polymers: olefin polymers such as polyethylene (of very low density, low density, linear low density, medium density or high density), polypropylene and ethylene-propylene copolymer; and styrene polymers such as polystyrene, styrene-diene block copolymers (styrene-butadiene diblock copolymer, styrene-isoprene diblock copolymer, styrene-butadiene-styrene triblock copolymer, styrene-isoprene-styrene triblock copolymer, etc.) and hydrogenated products thereof. Among these, styrene-diene block copolymers (styrene-butadiene diblock copolymer, styrene-isoprene diblock copolymer, styrene-butadiene-styrene triblock copolymer, styrene-isoprene-styrene triblock copolymer, etc.) and hydrogenated products thereof are particularly preferable.

Examples of polar groups include sulfur-containing groups such as a sulfonate group, a sulfenic acid group and a sulfinic acid group; a hydroxyl group, an epoxy group; carbonyl group-containing groups such as a ketone group, an ester group, an aldehyde group, a carboxyl group and an acid anhydride group; nitrogen-containing groups such as a nitro group, an amide group, an urea group and an isocyanate group; phosphorus-containing groups such as a phosphonic ester group and a phosphinic ester group; and boron-containing groups such as a boronic acid group, a boronic ester group, a boronic acid anhydride group and a boronic acid base. Among these, a carboxyl group and a boron-containing group are particularly preferable as a polar group to be contained in the compatibilizer (D) when the compatibilizer (D) is a polar group-containing polyhydrocarbon. Of these examples, when the polar group is a carboxyl group, the resultant resin composition has high thermal stability. As described above, when the oxygen-absorbing resin composition of the present invention contains a transition metal salt (B) in an excessive amount, the thermal stability of the resin composition may be deteriorated, but when a compatibilizer (D) having a carboxyl group is contained together with the transition metal salt (B), the thermal stability of the resin composition can be maintained.

There is no particular limitation regarding the method for producing the hydrocarbon polymer that contains the polar group. Examples include the following methods: 1) a method of copolymerizing a monomer that can form the polyhydrocarbon moiety and a monomer containing a polar group (or a group that can form the polar group); 2) a method of utilizing an initiator or a chain transfer agent that has the above-described polar group (or a group that can form the polar group) when polymerizing monomers that can form the polyhydrocarbon moiety; 3) a method of subjecting monomers that can form the polyhydrocarbon moiety to living polymerization and utilizing a monomer having the above-described polar group (or a group that can form the polar group) as a terminator (i.e., an end treatment agent); and 4) a method of polymerizing monomers that can form the polyhydrocarbon moiety wherein a monomer having the above-described polar group (or a group that can form the polar group) is introduced into a reactive moiety of the resultant polymer, for example, a carbon-carbon double bond moiety, by a reaction. In the method 1), any one of polymerization method of random copolymerization, block copolymerization and graft copolymerization can be employed when performing copolymerization.

Such polar group-containing compatibilizers (D) are disclosed in detail in, for example, Patent Document 4. Among the compatibilizers (D) disclosed therein, a hydrogenated product of a styrene-diene block copolymer containing a boronic ester group is preferable.

The compatibilizers (D) can be used alone or in combination of two or more.

When the oxygen-absorbing resin composition of the present invention contains the matrix resin (C) and the compatibilizer (D) as resin components in addition to the thermoplastic resin (A), it is preferable that the thermoplastic resin (A) is contained in a ratio of 29.9 to 1 wt%, the matrix resin (C) is contained in a ratio of 70 to 98.9 wt% and the compatibilizer (D) is contained in a ratio of 29 to 0.1 wt% when the total weight of the thermoplastic resin (A), the matrix resin (C) and the compatibilizer (D) is determined to be 100 wt%. If the content of the matrix resin (C) is less than 70 wt%, the gas barrier properties of the resultant oxygen-absorbing resin composition against oxygen or carbon dioxide may deteriorate. On the other hand, if the content of the matrix resin (C) exceeds 98.9 wt%, the oxygen absorbing function may deteriorate, and the stability of the morphology of the oxygen-absorbing resin composition may be impaired. The content of the thermoplastic resin (A) is more preferably in the range of 19.5 to 2 wt% and even more preferably 14 to 3 wt%. The content of the matrix resin (C) is more preferably in the range of 80 to 97.5 wt% and even more preferably 85 to 96 wt%. The content of the compatibilizer (D) is more preferably in the range of 18 to 0.5 wt% and even more preferably 12 to 1 wt%.

### (5) Other thermoplastic resins (E) and additives

The oxygen-absorbing resin composition of the present invention may contain a thermoplastic resin (E) other than the thermoplastic resin (A), the matrix resin (C) and the compatibilizer (D) insofar as the effects of the present invention are not impaired. For example, when the matrix resin (C) is a gas barrier resin (C-1), examples of the thermoplastic resin (E) include the following resins: polyolefins such as polyethylene, polypropylene, ethylene-propylene copolymer, a copolymer containing ethylene or propylene (copolymer containing ethylene or propylene and at least one of the following monomers as a copolymerized unit: α-olefins such as 1-butene, isobutene, 4-methyl-1-pentene, 1-hexene and 1-octene; unsaturated carboxylic acids such as itaconic acid, methacrylic acid, acrylic acid and maleic anhydride, and salts, partial or complete esters, nitriles, amides and anhydrides thereof; vinyl carboxylates such as vinyl formate, vinyl acetate, vinyl propionate, vinyl butylate, vinyl octanoate, vinyl dodecanoate, vinyl stearate and vinyl arachidonate; vinylsilane compounds such as vinyltrimethoxysilane; unsaturated sulfonic acids and salts thereof; alkylthiols; vinyl pyrrolidones and the like), poly(4-methyl-1-pentene) and poly(1-butene); polyesters such as poly(ethylene terephthalate), poly(butylene terephthalate) and poly(ethylene naphthalate); polystyrene; polycarbonate; and polyacrylates such as polymethylmethacrylate. The thermoplastic resin (E) is contained is preferably in a ratio of 10 wt% or less of the total weight of the oxygen-absorbing resin composition of the present invention.

In the oxygen-absorbing resin composition of the present invention, various additives may be contained within the range not interfering with the functions and effects of the present invention. Examples of such additives include plasticizers, thermal stabilizers (melt stabilizers), photoinitiators, deodorants, ultraviolet absorbers, antistatic agents, lubricants, colorants, drying agents, fillers, processing aids, flame retardants, antifogging agents, etc.

### (6) Oxygen-absorbing resin composition and molded products using the same

The oxygen-absorbing resin composition of the present invention contains, as described above, the thermoplastic resin (A) and the transition metal salt (B), and as necessary, the matrix resin (C), the compatibilizer (D), the other thermoplastic resin (E), and various additives.

In the oxygen-absorbing resin compositions of the present invention that contain certain resin(s) other than the thermoplastic resin (A), such as the matrix resin (C), it is recommended that particles of the thermoplastic resin (A) are dispersed in a matrix containing the resin(s) other than the thermoplastic resin (A) (i.e., at least one of the matrix resin (C), the compatibilizer (D) and the thermoplastic resin (E)), the transition metal salt (B), and various additives. For example, when the oxygen-absorbing resin composition of the present invention is composed of the thermoplastic resin (A), the transition metal salt (B) and the matrix resin (C), it is recommended that particles of the thermoplastic resin (A) are dispersed in the matrix containing the transition metal salt (B) and the matrix resin (C). Various molded products made of the oxygen-absorbing resin composition of the present invention of such a configuration have particularly excellent oxygen absorbing function and excellent transparency. Moreover, the function of the matrix resin (C) is sufficiently provided. For example, when the matrix resin (C) is a gas barrier resin (C-1), molded products exhibit good gas barrier properties. Moreover, when the oxygen-absorbing resin composition of the present invention contains a suitable amount of the compatibilizer (D), the dispersion effects described above can be consistently obtained.

The average particle size of the particles of the thermoplastic resin (A) is preferably such that the major axis thereof is 4 µm or less, more preferably 2 µm or less and even more preferably 1 µm or less. Such an average particle size of the thermoplastic resin (A) is obtained as a result of measurement by a scanning electron microscope (SEM) as described in the examples below.

A melt flow rate (MFR) (210°C, 2160 g load, according to JIS K7210) of the oxygen-absorbing resin composition of the present invention is preferably 0.1 to 100 g/10 min, more preferably 0.5 to 50 g/10 min and even more preferably 1 to 30 g/10 min. when the melt flow rate of the resin composition of the present invention fails to fall within an aforementioned range, the processability during melt-molding may often become poor.

The oxygen absorption rate of the oxygen-absorbing resin composition of the present invention is preferably 0.01 ml/g·day or more, and more preferably 0.05 ml/g·day or more. Here, the oxygen absorption rate is defined as the amount (mol) of oxygen absorbed by a film made of the oxygen-absorbing resin composition of the present invention per mol of carbon-carbon double bond contained in the resin composition in a unit time when the film is left to stand in air of a predetermined volume. A method for measuring the oxygen absorption rate will be presented in the examples below.

The oxygen-absorbing resin composition of the present invention can exhibit a high oxygen absorption rate particularly during the initial stage, i.e., within 1 to 3 days after production. The oxygen-absorbing resin composition of the present invention, even when a gas barrier resin (C-1) is used as the matrix resin (C), can be configured to exhibit an initial oxygen absorption rate of 0.10 mol O₂/day/mol C=C or more, or can be configured to exhibit 0.15 mol O₂/day/mol C=C or more, until the third day as measured in 100%RH at 23°C according to the method described below.

The components of the oxygen-absorbing resin composition of the present invention are mixed and then processed into a desired product. A method for mixing the components of the oxygen-absorbing resin composition of the present invention is not particularly limited. The order of mixing the components is also not particularly limited. For example, when the thermoplastic resin (A), the transition metal salt (B), the matrix resin (C) and the compatibilizer (D) are mixed, they may be mixed simultaneously, or the thermoplastic resin (A), the transition metal salt (B) and the compatibilizer (D) may be mixed first and then the matrix resin (C) is mixed therewith. Alternatively, the thermoplastic resin (A) and the compatibilizer (D) may be mixed first, and then the transition metal salt (B) and the matrix resin (C) may be mixed therewith; or the transition metal salt (B) and the matrix resin (C) may be mixed first, and then the thermoplastic resin (A) and the compatibilizer (D) may be mixed therewith. Moreover, the thermoplastic resin (A), the matrix resin (C) and the compatibilizer (D) may be mixed first, and then the transition metal salt (B) may be mixed herewith; or the transition metal salt (B) and the compatibilizer (D) may be mixed first, and then the thermoplastic resin (A) and the matrix resin (C) may be mixed therewith. In addition, a mixture obtained by mixing the thermoplastic resin (A), the matrix resin (C) and the compatibilizer (D) may be mixed with a mixture obtained by mixing the transition metal salt (B) and the matrix resin (C).

A specific mixing method is preferably the melt-kneading method in view of the process simplicity and the cost. In this case, it is preferable to use an apparatus that has high kneading ability to allow the components to be finely and uniformly dispersed because this can provide good oxygen absorbing function and good transparency and can prevent gels and aggregates from being generated or mixed.

Examples of apparatuses that can provide a high kneading level include continuous kneaders such as a continuous intensive mixer, a kneading-type twin-screw extruder (co-rotation or counter-rotation), a mixing roll and a Ko-kneader; batch kneaders such as a high-speed mixer, a Banbury mixer, an intensive mixer and a pressure kneader; apparatuses that use a rotary disk with a trituration mechanism such as a stone mill, for example, a KCK kneading extruder from KCK Co., Ltd.; apparatuses with a single-screw extruder provided with a kneading section (such as a Dulmage); simple kneaders such as a ribbon blender and a Brabender mixer. Among these apparatuses, continuous kneaders are preferable. Examples of commercially available continuous intensive mixers include FCM (trade name) from Farrel Corp., CIM (trade name) from The Japan Steel works, Ltd., and the KCM, LCM and ACM (all trade names) from Kobe Steel, Ltd. It is preferable to employ an apparatus in which an extruder and a pelletizer are installed in the discharge port of such a continuous kneader to perform kneading, extruding and pelletizing simultaneously. Moreover, examples of twin-screw kneading extruders equipped with a kneading disk or a kneading rotor include TEX (trade name) from The Japan Steel Works, Ltd., ZSK (trade name) from Werner & Pfleiderer Corp., TEM (trade name) from Toshiba Machine Co., Ltd., and PCM (trade name) from Ikegai Tekko Co, Ltd. A single kneader may be used, or two or more kneaders may be coupled for use.

The kneading temperature is usually in the range of 50 to 300°C. It is preferable to perform extrusion at low temperatures with the hopper port sealed with nitrogen in order to prevent the oxidation of the thermoplastic resin (A). The longer the kneading time is, the better the results are. However, in view of prevention of the oxidation of the thermoplastic resin (A) and the production efficiency, the kneading time is usually 10 to 600 seconds, preferably 15 to 200 seconds and even more preferably 15 to 150 seconds.

The oxygen-absorbing resin composition of the present invention can be molded into various molded products such as films, sheets, containers or other packaging materials by using various molding methods as appropriate. In this instance, the oxygen-absorbing resin composition of the present invention may be pelletized first and then subjected to molding, or the components of the oxygen-absorbing resin composition of the present invention may be dry-blended and subjected directly to molding.

With respect to molding methods and molded products, for example, the resin composition can be molded into films, sheets and the like by melt extrusion molding, into containers by injection molding, and into bottle-like hollow containers by blow molding. For blow molding, it is preferable to employ extrusion blow molding where a parison is formed by extrusion molding and is blown to give a molded product, as well as injection blow molding where a preform is formed by injection molding and is blown to give a molded product.

In the present invention, a molded product produced by an above-described molding method may be composed of a single layer, but it is preferable that the molded product is in the form of a multilayered structure obtained by laminating layers made of the resin composition of the present invention and other layers in view of providing characteristics such as mechanical properties, water vapor barrier properties, and additional gas barrier properties.

Examples of the layer configuration of the multilayered structure include x/y, x/y/x, x/z/y, x/z/y/z/x, x/y/x/y/x and x/z/y/z/x/z/y/z/x where x denotes a layer made of a resin other than the oxygen-absorbing resin composition of the present invention, y denotes a layer of the oxygen-absorbing resin composition of the present invention and z denotes an adhesive resin layer, but the configuration is not limited to these examples. When a plurality of x layers are provided, the kind of each layer may be the same or different. A layer of a recovered resin made of scraps generated by trimming during molding may be separately formed, or such a recovered resin may be blended in a layer made of another resin. The thickness of each layer of the multilayered structure is not particularly limited. The ratio of the thickness of the y layer is preferably 2 to 20% of the total thickness of all the layers in view of the moldability, the cost or the like.

A thermoplastic resin is preferable as a resin for use in the x layer in view of the processability or the like. Examples of such a thermoplastic resin include, but are not limited to, the following resins: polyolefins such as polyethylene, polypropylene, ethylene-propylene copolymer, a copolymer containing ethylene or propylene (a copolymer containing ethylene or propylene and at least one of the following monomers: α-olefins such as 1-butene, isobutene, 4-methyl-1-pentene, 1-hexene and 1-octene; unsaturated carboxylic acids such as itaconic acid, methacrylic acid, acrylic acid and maleic anhydride, and salts, partial or complete esters, nitriles, amides and anhydrides thereof; vinyl carboxylates such as vinyl formate, vinyl acetate, vinyl propionate, vinyl butylate, vinyl octanoate, vinyl dodecanoate, vinyl stearate and vinyl arachidonate; vinylsilane compounds such as vinyltrimethoxysilane; unsaturated sulfonic acids and salts thereof; alkylthiols; vinyl pyrrolidones; and the like), poly(4-methyl-1-pentene) and poly(1-butene); polyesters such as poly(ethylene terephthalate), poly(butylene terephthalate) and poly(ethylene naphthalate); polyamides such as polycaprolactam, polyhexamethylene adipamide and polymetaxylylene adipamide; polyvinylidene chloride; polyvinyl chloride; polystyrene; polyacrylonitrile; polycarbonate; and polyacrylates.

Among these thermoplastic resins, polyolefin resins are preferable because of their moisture resistance, mechanical properties, economy, heat-sealing properties and the like. Polyester resins are preferable because of their mechanical properties, heat resistance and the like.

On the other hand, there is no particular limitation regarding the adhesive resin for use in the z layer as long as it can bind the layers each other. For example, preferably used are polyurethane or polyester one-component or two-component curing adhesives as well as carboxylic acid-modified polyolefin resins and the like. The carboxylic acid-modified polyolefin resin is an olefin copolymer containing an unsaturated carboxylic acid or an anhydride thereof (e.g., maleic anhydride) as a copolymerized component; or a copolymer obtained by graft copolymerizing an unsaturated carboxylic acid or an anhydride thereof to an olefin polymer or a copolymer.

Among these, a carboxylic acid-modified polyolefin resin is preferable. The adhesion with the y layer is superior when the x layer is a polyolefin resin. Examples of such a carboxylic acid-modified polyolefin resin include a resin obtained by carboxylic acid modification of a polyethylene such as low density polyethylene (LDPE), linear low density polyethylene (LLDPE) or very low density polyethylene (VLDPE), polypropylene, an ethylene-vinyl acetate copolymer, an ethylene-(meth)acrylic ester (methyl ester or ethyl ester) copolymer or the like by grafting maleic anhydride or the like thereto.

Examples of methods for producing the multilayered structure include, but are not limited to, extrusion lamination, dry lamination, coinjection molding and coextrusion molding. Examples of coextrusion molding include coextrusion lamination, coextrusion sheet molding, blown film coextrusion and coextrusion blow molding.

The resultant multilayered sheet, multilayered film, container precursor (parison) and the like may be reheated at a temperature below the melting point of the contained resins and uniaxially or biaxially stretched by thermoforming such as draw forming, rolling, pantographic orientation, blown film orientation or extrusion blow molding, so that a stretched multilayered structure can be obtained as a molded product.

The functions of the multilayered structure of the present invention are exerted when the multilayered structure is made into a multilayered container. For example, a multilayered structure in which layers having strong moisture-resistance properties are provided on both sides of a layer made of the oxygen-absorbing resin composition of the present invention or on the side exposed to high humidity when the multilayered structure is used is preferable in that the retention period of oxygen absorbing function of the multilayered structure is prolonged, and as a result, very strong gas barrier properties can be maintained for a long time. Moreover, a multilayered container having a layer made of the oxygen-absorbing resin composition of the present invention as the innermost layer is preferable in that the oxygen absorbing function is promptly exerted inside the container.

A multilayered container composed of a multilayered film having a layer made of the oxygen-absorbing resin composition of the present invention and having a total thickness of 300 µm or less or a multilayered container having at least one layer made of the oxygen-absorbing resin composition of the present invention and at least one thermoplastic polyester layer has excellent transparency and is suitable for use as a packaging container through which the content thereof such as food is clearly visible.

The multilayered container composed of a multilayered film having a total thickness of 300 µm or less and having a layer made of the oxygen-absorbing resin composition of the present invention has flexibility and can usually be processed into the form of a pouch or the like. Such a multilayered container has excellent transparency and gas barrier properties and extended oxygen absorbing function, and is thus very useful for packaging of a product, food in particular, that is highly sensitive to oxygen and susceptible to degradation.

As described above, the total thickness of the multilayered film is 300 µm or less, more preferably 250 µm or less and even more preferably 200 µm or less, to retain the good transparency and flexibility. On the other hand, the total thickness is preferably 10 µm or more, more preferably 20 µm or more and even more preferably 30 µm or more in view of the mechanical strength as a multilayered container.

There is no particular limitation regarding the method for producing the multilayered film having a total thickness of 300 µm or less. For example, the multilayered film can be obtained by laminating a layer made of the oxygen-absorbing resin composition of the present invention and a layer made of another thermoplastic resin by a technique such as dry lamination or coextrusion lamination.

In the case of dry lamination, non-oriented films, uniaxially oriented films, biaxially oriented films, rolled films and the like can be used for the layer made of another thermoplastic resin. Among such films, a biaxially oriented polypropylene film, a biaxially oriented polyethylene terephthalate film and a biaxially oriented polycaprolactam film are preferable in view of mechanical strength. A biaxially oriented polypropylene film is particularly preferable also in view of moisture-resistance. When a non-oriented film or a uniaxially oriented film is used, the laminated film may be re-heated and stretched uniaxially or biaxially by thermoforming such as draw forming, rolling, pantographic orientation or blown film orientation, so that an oriented multilayered film can be formed.

In order to seal the obtained multilayered container, it is also preferable to form a layer made of a heat-sealable resin on at least one outermost layer surface of the multilayered film in the process of producing a multilayered film. Such heat-sealable resins include polyolefins such as polyethylene and polypropylene.

The multilayered container having at least one layer made of the oxygen-absorbing resin composition of the present invention and at least one layer made of a thermoplastic polyester has excellent transparency, gas barrier properties and oxygen absorbing function. Therefore, the multilayered container can be used in various forms such as a bag-shaped container, cup-shaped container or blow-molded container. Among these, this embodiment can be applied particularly well to blow-molded containers, especially bottles.

For a thermoplastic polyester for use in the multilayered container, a condensation polymer containing an aromatic dicarboxylic acid or an alkyl ester thereof and a diol as the main components may be used. In particular, in view of transparency, specifically, the total ratio (mol%) of the terephthalic acid unit and the ethylene glycol unit is preferably 70 mol% or more, and more preferably 90 mol% or more, of the total moles of all the structural units of the thermoplastic polyester. If the total ratio of the terephthalic acid unit and the ethylene glycol unit is kiss than 70 mol%, the resultant thermoplastic polyester is amorphous, so that the mechanical strength is insufficient. In addition, when a multilayered container is formed and then materials are hot-filled into the container, thermal contraction is so large that the container may not be put to practical use. The thermoplastic polyester described above may contain as necessary a bifunctional compound unit other than the terephthalic acid unit and the ethylene glycol unit. More specifically, the thermoplastic resin may contain a neopentyl glycol unit, a cyclohexane dimethanol unit, a cyclohexane dicarboxylic acid unit, an isophthalic acid unit, a naphthalene dicarboxylic acid unit or the like as long as the effects of the present invention are not impaired. There is no particular limitation regarding the method for producing the thermoplastic polyester and a known method can be selected as appropriate.

The method for producing the multilayered container of the present invention having at least one layer made of the oxygen-absorbing resin composition of the present invention and at least one thermoplastic polyester layer is preferably coinjection blow molding in view of productivity. In coinjection blow molding, the container is produced by subjecting a container precursor (parison) obtained by coinjection molding to stretch blow molding.

In a method for producing the parison by coinjection molding, in general, resins to constitute the layers of the multilayered structure are each guided into concentric nozzles from two or more injection cylinders and are injected into a single mold simultaneously or alternately at non-synchronized timing, and one clamping operation is then performed for molding. For example, a parison may be produced by the following methods (hereinafter, a thermoplastic polyester is referred to as PES, and the oxygen-absorbing resin composition of the present invention is referred to as SC): (1) PES for the inner and outer layers are injected first, and then SC for the intermediate layer is injected, thereby giving a parison of a three-layered structure of PES / SC / PES; and (2) PES for the inner and outer layers are injected first, SC is then injected, and another PES is injected simultaneously with the injection of SC or thereafter, thereby giving a parison of a five-layered structure of PES / SC / PES / SC / PES. Moreover, an adhesive resin layer may be disposed as necessary between an SC layer and a PES layer in the above-described layered structures.

Regarding the conditions for injection molding, PES is preferably injected at a temperature in the range of 250 to 330°C, more preferably 270 to 320°C and even more preferably 280 to 310°C. If the injection temperature for PES is lower than 250°C, PES does not sufficiently melt, and the resultant molded product may contain non-molten substances (i.e., fisheyes), thereby worsening the appearance, and moreover, causing the deterioration of the mechanical strength of the molded product. In some extreme cases, the screw torque required in injecting PES may be increased, so that the molding machine may have operational malfunction. On the other hand, if the injection temperature for PES exceeds 330°C, decomposition of PES is significant, which may lead to a lowered molecular weight, so that the mechanical strength of the molded product may be lowered. Moreover, acetaldehyde or the like generated during the decomposition may deteriorate the properties of the materials to be filled into the molded product, and in addition, the oligomers generated during the decomposition may stain the mold, and thus the parison may have a poor appearance.

On the other hand, SC is preferably injected at a temperature in the range of 170 to 250°C, more preferably 180 to 240°C and even more preferably 190 to 230°C. If the injection temperature for SC is lower than 170°C, SC may not sufficiently melt and the resultant molded product may contain non-molten substances (i.e., fisheyes), thereby worsening the appearance. In some extreme cases, the screw torque required in injecting SC may increase, so that the molding machine may have operational malfunction. On the other hand, when the injection temperature for SC exceeds 250°C, oxidation of the thermoplastic resin (A) may proceed, so that the gas barrier properties and oxygen absorbing function of SC may be degraded. In addition, the parison may have a poor appearance due to coloring and gelled materials, so that the SC layer may have failed areas due to decomposition gas and gelled materials. It is preferable to seal the supply hopper with nitrogen in order to suppress the progress of the oxidation of SC during the injection operation.

The total thickness of the parison thus obtained is preferably in the range of 2 to 5 mm, and the total thickness of the SC layer(s) is preferably in the range of 10 to 500 µm.

The above-described parison is transferred to the stretch blowing process directly in a high-temperature state or after being re-heated with a heating member such as a block heater, infrared heater or the like. In the stretch blowing process, the heated parison is stretched one- to five-fold in the machine direction and then blown one- to four-fold with nitrogen or the like, so that the multilayered container of the present invention can be produced. The heating temperature for the parison during blow molding is preferably in the range of 75 to 150°C, more preferably 85 to 140°C, even more preferably 90 to 130°C and most preferably 95 to 120°C. If the heating temperature exceeds 150°C, PES tends to be crystallized, which may result in whitening in the resultant container, thereby impairing the transparency, or may result in increased interlayer delamination in the container. On the other hand, if the heating temperature is less than 75°C, the PES may be crazed and appear in a pearl-like color, so that the transparency of the container may be impaired.

The total thickness of the body part of the multilayered container thus obtained is usually in the range of 100 to 2000 µm and preferably 150 to 1000 µm, and may vary depending on the use. In this instance, the total thickness of the SC layers is preferably in the range of 2 to 200 µm and more preferably 5 to 100 µm.

In this manner, the multilayered container having the layer made of the oxygen-absorbing resin composition of the present invention and the layer made of the thermoplastic polyester is obtained. The container has very excellent transparency, gas barrier properties and oxygen absorbing function and does not generate any odorous substance as a result of oxygen absorption. The container is therefore of use as a container for materials susceptible to degradation in the presence of oxygen, such as foods and pharmaceutical products. In particular, it is of significant use as a container for foods and beverages such as beer with which flavor is important.

Furthermore, the oxygen-absorbing resin composition of the present invention is suitable for use as a container packing (gasket), especially as a gasket for a container cap. In this case, there is no particular limitation regarding the material of the cap body, and materials that are generally used in the art of thermoplastic resins and metals can be used. A cap furnished with the gasket exhibits excellent gas barrier properties and extended oxygen absorbing function, and does not generate any odorous substance as a result of oxygen absorption. Therefore, this cap is very useful as a cap used for containers of a product that is highly sensitive to oxygen and susceptible to degradation, in particular, foods and beverages with which flavor is important.

### Examples

Hereinafter, the present invention will be described in more detail by way of examples, but the invention is not limited thereto. In the following examples and comparative examples, analysis and evaluation were performed in the following manner.

### (1) Molecular structure of thermoplastic resin (A):

The molecular structure was determined by a nuclear magnetic resonance ¹H-NMR) measurement using CDCl₃ as a solvent (A "JNM-GX-500 Model" manufactured by JEOL Ltd., was used).

### (2) Number average molecular weight (Mn) and weight average molecular weight (Mw) of thermoplastic resin (A):

Measurement was performed by gel permeation chromatography (GPC), and the values were represented in terms of polystyrene. The details of the measurement conditions are as follows:

### <Analytical conditions>

Apparatus: Gel permeation chromatography (GPC) SYSTEM-11 manufactured by Shodex
Column: KF-806L (Shodex), Column temperature: 40°C
Mobile phase: Tetrahydrofuran, Flow rate: 1.0 ml/min
Detector: RI
Filtration: 0.45 µm filter
Concentration: 0.1%

### (3) Ethylene content and degree of saponification of EVOH:

The ethylene content and the degree of saponification of EVOH were calculated based on a nuclear magnetic resonance (¹H-NMR) measurement using DMSO-d₆ as a solvent ("JNM-GX-500 Model" manufactured by JEOL Ltd., was used).

### (4) Measurement of particle size of thermoplastic resin (A) dispersed in oxygen-absorbing resin composition:

Films having predetermined thicknesses were obtained from the oxygen-absorbing resin compositions obtained in the examples and comparative examples described below. According to a standard method, these films were cut with a microtome in any direction perpendicular to the film surface for pressed films, or in a direction orthogonal to the direction of extrusion and perpendicular to the film surface for extruded films, and the resultant cut surfaces were vapor-deposited with platinum under reduced pressure. The cut surface on which platinum had been vapor-deposited was photographed from the direction perpendicular to the cut surface using a scanning electron microscope (SEM) at 10000-fold magnification. An area containing about 20 particles of the thermoplastic resin (A) was selected in the photograph and the particle size of each particle image present in the area was measured. The average was calculated and employed as the size of the dispersed particles. For the particle size of each particle, the major axis (length of the longest portion) observed in the photograph was measured and this was employed as the particle size.

### (Synthesis Example 1) Synthesis of polynorbornene (A-1)

A 5 L three-necked flask equipped with a stirrer and a thermometer was purged with dry nitrogen, and then charged with 624 g of heptane in which 94 g (1 mol) of norbornene and 187 mg (1.67 mmol) of cis-4-octene were dissolved into the flask.

Then, a catalyst solution in which 42.4 mg (49.9 µmol) of [1,3-bis-(2,4,6-trimethylphenyl)-2-imidazolidinylidene]dichloro(phenylme thylene)(tricyclohexylphosphine)ruthenium was dissolved in 3.00 g of toluene was prepared, and this solution was added to the aforementioned solution to effect ring-opening metathesis polymerization at 60°C. One hour later, an analysis was performed by gas chromatography (GC-14B manufactured by Shimadzu Corporation; column: G-100 manufactured by Chemical Product Inspection Society), and it was confirmed that the norbornene had disappeared. Thereafter, 1.08 g (15.0 mmol) of ethyl vinyl ether was added thereto and the mixture was stirred for another 10 minutes.

Then, 600 g of methanol was added to the resultant reaction mixture and the mixture was stirred at 40°C for 30 minutes. Thereafter, the mixture was allowed to stand at 40°C for one hour for separation and then the lower layer was removed. Then, 600 g of methanol was added to the upper layer and stirred at 55°C for 30 minutes. Thereafter, the mixture was allowed to stand at 40°C for one hour for separation and the lower layer was then removed. The upper layer was concentrated under a reduced pressure, and the residue was dried by a vacuum dryer at 50 Pa at 40°C for 24 hours to give 88.1 g of polynorbornene (A-1) having a weight average molecular weight (Mw) of 168000 and a number average molecular weight (Mn) of 36000 (yield in terms of norbornene: 94%).

### (Synthesis Example 2) Synthesis of polynorbornene (A-2)

The same operation was performed as in Synthesis Example 1 except that the amount of cis-4-octene was 374 mg (3.33 mmol), and polynorbornene (A-2) having a weight average molecular weight (Mw) of 88000 and a number average molecular weight (Mn) of 4500 was obtainedin an amount of 86.3 g (yield in terms of norbornene: 92%).

### (Synthesis Example 3) Synthesis of compatibilizer (D-1)

First, a hydrogenated product of styrene-butadiene-styrene triblock copolymer (weight average molecular weight (Mw) = 100400, styrene/butadiene = 18/82 (weight ratio), molar ratio of 1,2-bond/1,4-bond in butadiene unit = 47/53, degree of hydrogenation = 97%, amount of carbon-carbon double bond = 430 µmol/g, melt flow rate = 5 g/10 min (230°C, 2160 g load), density = 0.89 g/cm³, manufactured by Kuraray Co., Ltd.) was fed into a co-rotational twin-screw extruder TEM-35B (manufactured by Toshiba Machine Co., Ltd.) at a rate of 7 kg/hour while purging the feeding port with nitrogen at a rate of 1 l/min. The structure and the operational conditions of the twin-screw extruder used for the reaction are as follows: screw diameter: 37 mmΦ L/D: 52 (15 blocks); liquid feeder: C3 (liquid feeder 1) and C11 (liquid feeder 2); vent position: C6 (vent 1) and C14 (vent 2); screw structure: seal rings were used between C5 and C6, between C10 and C11 and at the position of C12; temperature setting: C1 (water-cooling), C2 to C3 (200°C), C4 to C15 (250°C), die (250°C); and screw rotation: 400 rpm. Then, a mixture of borane-triethylamine complex (TEAB) and boric acid 1,3-butanediol ester (BBD) (weight ratio of TEAB/BBD = 29/71) was supplied from the liquid feeder 1 at a rate of 0.6 kg/hour, and 1,3-butanediol was supplied from the liquid feeder 2 at a rate of 0.4 kg/hour, and continuously kneaded. During kneading, the pressure was regulated such that the gauges at the vent 1 and the vent 2 indicated about 2.7 kPa. As a result, a hydrogenated product (compatibilizer (D-1)) of modified styrene-butadiene-styrene triblock copolymer containing a boronic acid 1,3-butanediol ester group (BBDE) was obtained at a rate of 7 kg/hour from the discharge port. The amount of the boronic acid 1,3-butanediol ester group in the compatibilizer (D-1) was 210 µmol/g.

### (Comparative Synthesis Example 1) Synthesis of epoxy group-containing polybutadiene (A-2)

As a raw material, polybutadiene (polybutadiene rubber "Nipol BR1220" manufactured by ZEON CORPORATION, hereinafter referred to as polybutadiene (A'-1)) was used. This resin had a number average molecular weight (Mn) of 160000, contained cis-polybutadiene, trans-polybutadiene and 1,2-polybutadiene in a molar ratio of 96/2/2 and had carbon-carbon double bonds in the side chains in a ratio of 2% relative to the total carbon-carbon double bonds (when the amount of carbon-carbon double bonds in the main chain is a (mol/g) and the amount of carbon-carbon double bonds in the side chains is b (mol/g), 100 × *b* / (*a*+*b*) = 2).

To a 300 ml separable flask equipped with a condenser, a dropping funnel, a thermometer and a mechanical stirrer, 25 g of the polybutadiene (A'-1), 250 g of cyclohexane and 0.32 g of trioctylmethylammonium chloride were added, and dissolved while stirring at 60°C. The resultant solution was heated to 70°C, and an aqueous solution prepared by dissolving 0.15 g (0.05 mmol) of ammonium tungstate and 0.33 g (3.3 mmol) of phosphoric acid in 20 g of water was added thereto. Then, while the resultant mixture was stirred vigorously at 70°C, 5.21 g (0.046 mol) of a 30% aqueous hydrogen peroxide solution was added dropwise over 4 hours, and the reaction mixture was further stirred for 2 hours. The reaction mixture was separated into an organic layer and an aqueous layer at 60°C, and the aqueous layer was removed. The organic layer thus obtained was sequentially washed with 100 ml of water, with 100 ml of a 5% aqueous sodium carbonate solution and twice with 100 ml of water. The organic layer was concentrated under a reduced pressure and the resultant residue was dried at 80°C and a pressure of 800 Pa for 8 hours. The resultant epoxy group-containing polybutadiene (A'-2) (yield: 33.2 g) was analyzed with ¹H-NMR. The conversion ratio of the carbon-carbon double bonds (ratio of the consumed carbon-carbon double bonds) was 10%, the epoxidation ratio (epoxy group formation ratio based on the amount of original carbon-carbon double bonds) was 9.85%, and thus the selectivity ratio (epoxy group formation ratio based on the amount of the consumed carbon-carbon double bonds) was 98.5%. In this polymer, the ratio of the carbon-carbon double bonds in the side chains relative to the total carbon-carbon double bonds was 2%.

### (Comparative Synthesis Example 2) Synthesis of hydroxyl group-containing polybutadiene (A'-3)

To a 300 ml separable flask equipped with a condenser, a dropping funnel, a thermometer and a mechanical stirrer, 25 g of the epoxy group-containing polybutadiene (A'-2) obtained in Comparative Synthesis Example 1, 250 g of tetrahydrofuran and 10 g of 0.1% perchloric acid were added, and the mixture was stirred at 60°C for 6 hours. The reaction mixture was cooled to 25°C and neutralized with 10 ml of a 5% aqueous ammonia solution. The resultant reaction mixture was added to 500 g of methanol, and a precipitated product was collected and dried at 80°C and a pressure of 800 Pa for 8 hours. The resultant hydroxyl group-containing polybutadiene (A'-3) (yield: 23.5 g) was analyzed with ¹H-NMR. The conversion ratio of epoxy groups (ratio of the consumed epoxy groups) was 100%, the hydrolysis ratio (hydroxyl group formation ratio based on the amount of original epoxy groups) was 98.5%, and thus the selectivity ratio (hydroxyl group formation ratio based on the amount of the consumed epoxy groups) was 98.5%. In this polymer, the ratio of carbon-carbon double bond in the side chains relative to the total carbon-carbon double bonds was 2%.

### (Comparative Synthesis Example 3) Synthesis of styrene-isoprene-styrene triblock copolymer (A'-4)

First, 600 ml of cyclohexane, 0.16 ml of N,N,N',N'-tetramethylethylenediamine and 0.094 ml of a cyclohexane solution of n-butyllithium (concentration: 10 wt%) as an initiator were placed into an autoclave that was provided with a stirrer and a feeding port and in which the system had been purged with dry nitrogen. The mixture was heated to 50°C and 4.25 ml of styrene was added, and polymerization was carried out for 1.5 hours. Next, the temperature was reduced to 30°C and 120 ml of isoprene was added. After completing the addition, polymerization was carried out for 2.5 hours. Furthermore, the temperature was raised again to 50°C and 4.25 ml of styrene was added thereto, and polymerization was carried out for 1.5 hours.

The resultant reaction mixture was poured into methanol to precipitate a product. This product was separated and dried to give a styrene-isoprene-styrene triblock copolymer (A'-4). Then, to the triblock copolymer, 2-tert-butyl-6-(3-tert-butyl-2-hydroxy-5-methylbenzyl)-4-methylphenyl acrylate and pentaerythritol tetrakis(3-laurylthiopropionate) were added as antioxidants each in an amount of 0.12 wt% relative to the triblock copolymer (A'-4).

Of the resultant triblock copolymer (A'-4), the number average molecular weight (Mn) was 85000, the styrene content was 14 mol%, the ratio of carbon-carbon double bond in the side chains relative to the total carbon-carbon double bonds was 55% in the isoprene block, the content of carbon-carbon double bond in the triblock copolymer was 0.014 mol/g, and the melt flow rate was 7.7 g/10 min.

### (Example 1.1)

First, 100 g of the polynorbornene (A-1) and 0.8484 g of cobalt(II) stearate (0.0800 g in terms of cobalt) were dry-blended, and melt-kneaded using a roller mixer (LABO PLASTOMIL Model R100 manufactured by Toyo Seiki Seisaku-sho Ltd.) at a screw rotation of 60 rpm at 190°C while purging the chamber with nitrogen, and the blend was removed after 5 minutes in the bulk form. The obtained bulk product was cut into pellets to give oxygen-absorbing resin composition pellets made of the polynorbornene (A-1) and cobalt stearate.

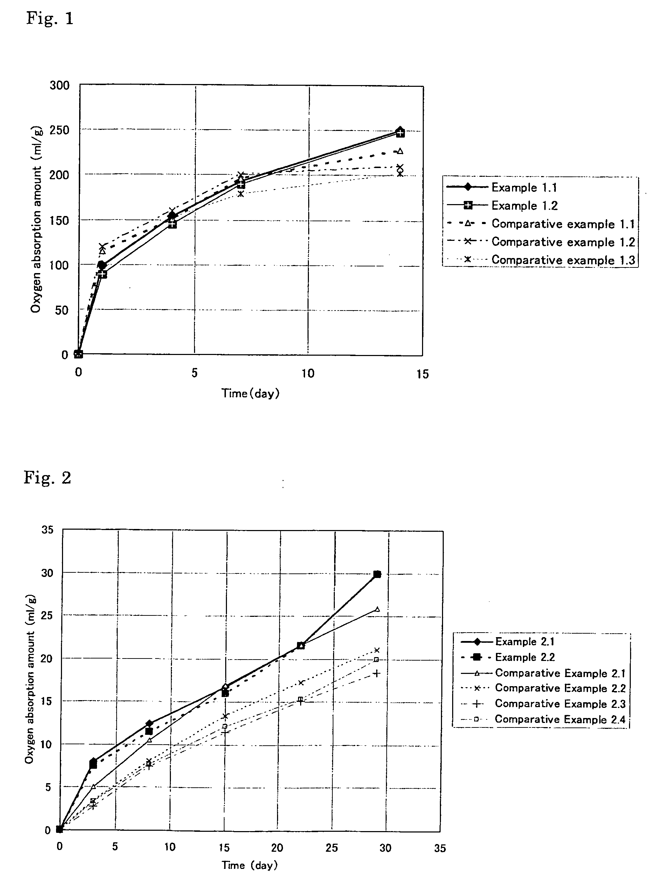

The obtained pellets were molded at 200°C using a compression molding machine (manufactured by SHINTO Metal Industries Corporation) to give a film having a thickness of 100 µm. The resultant film was cut and precisely weighed to obtain a film sample weighing 0.1 g. The obtained film was rolled 5 hours after molding and placed in a standard bottle having an internal volume of 260 ml that had been filled with 50%RH air at 23°C, the air containing oxygen and nitrogen in a volume ratio of 21:79. A piece of filter paper that had been soaked in water was placed inside to attain the relative humidity inside the bottle of 100%RH, and the opening of the standard bottle was sealed with a multilayered sheet having an aluminum layer using an epoxy resin. The bottle was left to stand at 60°C. After sealing, the inner air was periodically sampled with a syringe to measure the oxygen concentration of the air by gas chromatography. The small hole formed through the multilayered sheet during the sampling was sealed with the epoxy resin every time the hole was formed. The amount of oxygen absorbed by the oxygen-absorbing resin composition in a 100%RH atmosphere at 60°C was obtained by calculating the amount of oxygen decreased based on the volume ratio of oxygen to nitrogen obtained by the measurement. Figure 1 and Table 1 show the oxygen absorption amount (cumulative amount) in 1 day (24 hours), 4 days (96 hours), 7 days (168 hours) and 14 days (336 hours) after sealing. The oxygen absorption amount over 14 days (cumulative amount) was adopted to calculate the oxygen absorption amount (mol) by the resin per 1 mol of carbon-carbon double bond of the resin contained in the oxygen-absorbing resin composition, and the result was 0.86 mol O₂/mol C=C.

### (Example 1.2)

Oxygen-absorbing resin composition pellets were obtained and a film was prepared in the same manner as in Example 1.1 except that the polynorbornene (A-2) obtained in Synthesis Example 2 was used as the thermoplastic resin (A) in place of the polynorbornene (A-1). Using this film, the oxygen absorption amount was obtained and the oxygen absorption amount (mol) per mol of carbon-carbon double bond was calculated in the same manner as in Example 1.1. The results are shown in Figure 1 and Table 1.

### (Comparative Example 1.1)

Oxygen-absorbing resin composition pellets were obtained and a film was prepared in the same manner as in Example 1.1 except that the polybutadiene (A'-1) was used as the thermoplastic resin (A) in place of the polynorbornene (A-1). Using this film, the oxygen absorption amount was obtained and the oxygen absorption amount (mol) per mol of carbon-carbon double bond was calculated in the same manner as in Example 1.1. The results are shown in Figure 1 and Table 1.

### (Comparative Example 1.2)

Oxygen-absorbing resin composition pellets were obtained and a film was prepared in the same manner as in Example 1.1 except that the hydroxyl group-containing polybutadiene (A'-3) obtained in Comparative Synthesis Example 2 was used as the thermoplastic resin (A) in place of the polynorbornene (A-1). Using this film, the oxygen absorption amount was obtained and the oxygen absorption amount (mol) per mol of carbon-carbon double bond was calculated in the same manner as in Example 1.1. The results are shown in Figure 1 and Table 1.

### (Comparative Example 1.3)

Oxygen-absorbing resin composition pellets were obtained and a film was prepared in the same manner as in Example 1.1 except that the styrene-isoprene-styrene triblock copolymer (A'-4) obtained in Comparative Synthesis Example 3 was used as the thermoplastic resin (A) in place of the polynorbornene (A-1). Using this film, the oxygen absorption amount was obtained and the oxygen absorption amount (mol) per mol of carbon-carbon double bond was calculated in the same manner as in Example 1.1. The results are shown in Table 1 and Figure 1.

**Table 1**

| | Thermoplastic resin (A) | Oxygen absorption amount (ml/g)*¹ | | | | Oxygen absorption amount (molO₂/molC=c)*¹ |
|---|---|---|---|---|---|---|
| | | 1 Day | 4 Days | 7 Days | 14 Days | |
| Example 1.1 | A-1 | 99 | 154 | 193 | 250 | 0.86 |
| Example 1.2 | A-2 | 89 | 145 | 190 | 248 | 0.85 |
| Comparative Example 1.1 | A'-1 | 114 | 151 | 196 | 228 | 0.45 |
| Comparative Example 1.2 | A'-3 | 120 | 160 | 200 | 210 | 0.49 |
| Comparative Example 1.3 | A'-4 | 99 | 153 | 179 | 202 | 0.59 |

| | | | | | | |
|---|---|---|---|---|---|---|
| *1: Results of measurement at 60° C in 100%RH | | | | | | |

### (Example 2.1)

In this example and in Example 2.2 and Comparative Examples 2.1 to 2.4 below, EVOH having the following composition and physical properties (EVOH containing a phosphate compound and a sodium salt; hereinafter referred to as "EVOH (C-1)") was used as a gas barrier resin (C).

Ethylene content: 32 mol%, degree of saponification: 99.6%, melt flow rate (MFR): 3.1 g/10 min (210°C, 2160 g load), phosphate compound content: 100 ppm (in terms of phosphoric acid radical), sodium salt content: 65 ppm (in terms of sodium), melting point: 183°C, oxygen transmission rate: 0.4 ml·20 µm/m²·day·atm (20°C, 65%RH).

First, 90 g of the EVOH (C-1), 10 g of the polynorbornene (A-1) and 0.8484 g of cobalt(II) stearate (0.0800 g in terms of cobalt) were dry-blended, and melt-kneaded using a roller mixer (LABO PLASTOMIL Model R100 manufactured by Toyo Seiki Seisaku-sho Ltd.) at a screw rotation of 60 rpm at 200°C while purging the chamber with nitrogen. The mixture was removed in the bulk form after 5 minutes. The obtained bulk product was cut into pellets to give oxygen-absorbing resin composition pellets.

The obtained pellets were molded at 210°C using a compression molding machine (manufactured by SHINTO Metal Industries Corporation) to give a film having a thickness of 100 µm. Observation of the cross-section of the film through an SEM revealed that the polynorbornene (A-1) particles having a size of 1 µm or less were dispersed in the matrix of the EVOH (C-1).

Then, this film was cut and precisely weighed to obtain a sample film weighing 0.5 g, and as in Example 1.1, placed in a standard bottle. Measurement was performed in the same manner as in Example 1.1 except that the film was left to stand at a temperature of 23°C to obtain the oxygen absorption amount of the oxygen-absorbing resin composition in a 100%RH atmosphere at 23°C. The oxygen absorption amount during the initial stage calculated by dividing the oxygen absorption amount over 3 days from the beginning of the measurement by the number of days (3 days) was 2.7 ml/g·day. This value was further divided by the amount (mol) of carbon-carbon double bond in the oxygen-absorbing resin composition to calculate the initial oxygen absorption rate, thereby giving 0.11 mol O₂/mol C=C·day. The results are shown in Figure 2 and Table 2.

### (Example 2.2)

A film was obtained in the same manner as in Example 2.1 except that the polynorbornene (A-2) prepared in Synthesis Example 2 was used as the thermoplastic resin (A). Observation of the cross-section of this film through an SEM revealed that the polynorbornene (A-2) particles having a size of 1 µm or less were dispersed in the matrix of the EVOH (C-1). Using this film, the oxygen absorption amount was obtained and the initial oxygen absorption rate was calculated in the same manner as in Example 2.1. The results are shown in Figure 2 and Table 2.

### (Comparative Example 2.1)

Pellets were obtained and a film was prepared in the same manner as in Example 2.1 except that the polybutadiene (A'-1) was used in place of the polynorbornene (A-1). Observation of the cross-section of this film through an SEM revealed that the polybutadiene (A'-1) particles having a size of 1 µm or less were dispersed in the matrix of the EVOH (C-1). Using this film, the oxygen absorption amount was obtained and the initial oxygen absorption rate was calculated in the same manner as in Example 2.1. The results are shown in Figure 2 and Table 2.

### (Comparative Example 2.2)

A film made of a resin composition was obtained in the same manner as in Example 2.1 except that the epoxy group-containing polybutadiene (A'-2) obtained in Comparative Synthesis Example 1 was used in place of the polynorbornene (A-1). Observation of the cross-section of this film through an SEM revealed that the epoxy group-containing polybutadiene (A'-2) particles having a size of 1 to 2 µm were dispersed in the matrix of the EVOH (C-1). Using this film, the oxygen absorption amount was obtained and the initial oxygen absorption rate was calculated in the same manner as in Example 2.1. The results are shown in Figure 2 and Table 2.

### (Comparative Example 2.3)

A film was obtained in the same manner as in Example 2.1 except that a polybutadiene "Polyoil 130" manufactured by ZEON CORPORATION (hereinafter referred to as polybutadiene (A'-5), number average molecular weight (Mn): 3000, ratio of carbon-carbon double bonds in the side chains relative to the total carbon-carbon double bonds: 1%) was used in place of the polynorbornene (A-1). Observation of the cross-section of this film through an SEM revealed that the polybutadiene (A'-5) particles having a size of 1 to 10 µm were dispersed in the matrix of the EVOH (C-1). Using this film, the oxygen absorption amount was obtained and the initial oxygen absorption rate was calculated in the same manner as in Example 2.1. The results are shown in Figure 2 and Table 2.

### (Comparative Example 2.4)

A film made of a resin composition was obtained in the same manner as in Example 2.1 except that the styrene-isoprene-styrene triblock copolymer (A'-4) was used as the thermoplastic resin (A). Observation of the cross-section of this film through an SEM revealed that the styrene-isoprene-styrene triblock copolymer (A'-4) particles having a size of 1 to 2 µm were dispersed in the matrix of the EVOH (C-1). Using this film, the oxygen absorption amount was obtained and the initial oxygen absorption rate was calculated in the same manner as in Example 2.1. The results are shown in Figure 2 and Table 2.

**Table 2**

| | Thermoplastic resin (A) | Matrix resin (C) | A/C*¹ | Oxygen absorption amount (ml/g)*² | | | | | Initial oxygen amount (ml/g·day)*² | Initial oxgen absorption rate (molO₂/molC=C·day)*² |
|---|---|---|---|---|---|---|---|---|---|---|
| | | | | 1 Day | 8 Days | 15 Days | 22 Days | 29 Days | | |
| Example 2.1 | A-1 | C-1 | 10/90 | 8.0 | 12.4 | 16.8 | 21.6 | 30.0 | 2.7 | 0.11 |
| Example 2.2 | A-2 | C-1 | 10/90 | 7.5 | 11.5 | 16.0 | 21.5 | 29.9 | 2.5 | 0.10 |
| Comparative Example 2.1 | A'-1 | C-1 | 10/90 | 5.0 | 10.5 | 16.9 | 21.6 | 25.9 | 1-7 | 0.04 |
| Comparative Example 2.2 | A'-2 | C-1 | 10/90 | 3.4 | 8.1 | 134 | 17.3 | 21.1 | 1.1 | 0.03 |
| Comparative Example 2.3 | A'-5 | C-1 | 10/90 | 2.8 | 7.5 | 11.5 | 15.1 | 18.4 | 0.9 | 0.02 |
| Comparative Example 2.4 | A'-4 | C-1 | 10/90 | 3.4 | 7.7 | 12.2 | 15.4 | 20.0 | 1.1 | 0.04 |

| | | | | | | | | | | |
|---|---|---|---|---|---|---|---|---|---|---|
| *1: Weight ratio of thermoplastic resin (A) to matrix resin (C) *2: Results of measurement at 23° C in 100%RH | | | | | | | | | | |

### (Example 3.1)

First, 95 g of the EVOH (C-1), 5 g of the polynorbornene (A-1) and 0.8484 g of cobalt(II) stearate (0.0800 g in terms of cobalt) were dry-blended, and extruded as strands using a 25 mmΦ twin-crew extruder (LABO PLASTOMIL Model 15C300 manufactured by Toyo Seiki Seisaku-sho Ltd.) at a screw rotation of 100 rpm at 210°C followed by cutting. Next, the resultant product was dried under a reduced pressure at 40°C for 16 hours to give oxygen-absorbing resin composition pellets.

The obtained pellets were subjected to extrusion molding at 210°C to give a film having a thickness of 20 µm. Observation of the cross-section of this film through an SEM revealed that the polynorbornene (A-1) particles having a size of 1 µm or less were dispersed in the matrix of the EVOH (C-1).

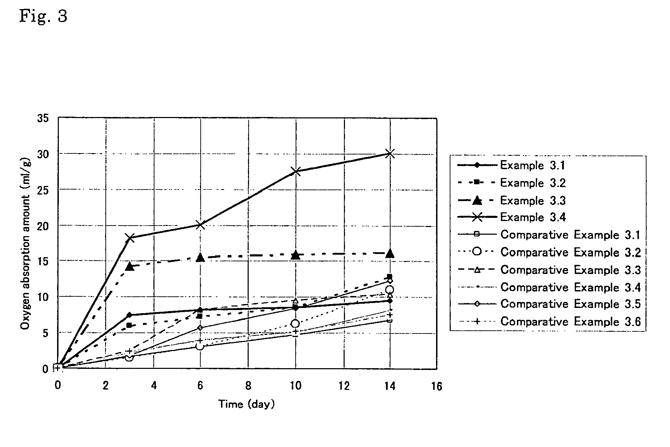

Using this film, the oxygen absorption amounts were obtained by a measurement carried out after the periods (days) indicated in Table 3 in the same manner as in Example 2.1, and the initial oxygen absorption rate at 23°C in a 100%RH atmosphere was calculated likewise. The results are shown in Figure 3 and Table 3.

Furthermore, an odor evaluation and a measurement of the haze value of the film were performed as described below.

### (Odor Evaluation)

The film was cut and precisely weighed to obtain a sample film weighing 1 g. This film was rolled 5 hours after the film formation and placed in an 85 ml standard bottle filled with 50%RH air at 23°C. A piece of filter paper that had been soaked in water was placed inside to attain the relative humidity inside the bottle of 100%RH, and the opening of the standard bottle was sealed with a multilayered film having an aluminum layer using an epoxy resin, and the bottle was left to stand at 60°C for 2 weeks. Thereafter, the odor of the air inside the standard bottle was subjected to a sensory evaluation by a panel of 5 people.

### (Haze value)

The haze value of the above-described film measured using a POIC integrating sphere-type light transmittance/light reflectance meter ("HR-100" manufactured by Murakami Color Research Laboratory Co., Ltd.) according to ASTM D1003-61.

The results are shown in Table 4. In the odor column in Table 4, ⊚ indicates that almost no odor is present in the air inside the standard bottle; ○ indicates that odor is present in the air inside the standard bottle at a low level; Δ indicates that odor is present in the air inside the standard bottle; and × indicates that strong odor is present in the air inside the standard bottle. The evaluation results given by the 5 panelists in the examples and comparative examples were in agreement. The × in the haze column indicates that the film could not be subjected to a haze measurement due to, for example, considerable aggregation and thickness unevenness.

### (Example 3.2)

A film was obtained in the same manner as in Example 3.1 using 93 g of the EVOH (C-1), 5 g of the polynorbornene (A-1), 2 g of the compatibilizer (D-1) and 0.8484 g of cobalt(II) stearate. Observation of the cross-section of this film through an SEM revealed that the polynorbornene (A-1) particles having a size of 1 µm or less were dispersed in the matrix of the EVOH (C-1). Using this film, the oxygen absorption amount, initial oxygen absorption rate, odor and haze value were measured in the same manner as in Example 3.1. The results are shown in Figure 3 and Table 3.

### (Example 3.3)

A film was obtained in the same manner as in Example 3.1 using 90 g of the EVOH (C-1), 8 g of the polynorbornene (A-1), 2 g of the compatibilizer (D-1) and 0.8484 g of cobalt(II) stearate. Observation of the cross-section of this film through an SEM revealed that the polynorbornene (A-1) particles having a size of 1 µm or less were dispersed in the matrix of the EVOH (C-1). Using this film, the oxygen absorption amount, initial oxygen absorption rate, odor and haze value were measured in the same manner as in Example 3.1. The results are shown in Figure 3 and Table 3.

### (Example 3.4)

A film was obtained in the same manner as in Example 3.1 except that 90 g of polyethylene "Mirason 11" manufactured by Mitsui Chemicals, Inc., (hereinafter referred to as polyethylene (C-2)) in place of the EVOH (C-1) and 10 g of the polynorbornene (A-1) were used. Observation of the cross-section of this film through an SEM revealed that the polynorbornene (A-1) particles having a size of 1 µm or less were dispersed in the matrix of the polyethylene (C-2). Using this film, the oxygen absorption amount, initial oxygen absorption rate, odor and haze value were measured in the same manner as in Example 3.1. The results are shown in Figure 3 and Table 3.

### (Comparative Example 3.1)

A film was obtained in the same manner as in Example 3.1 except that the polybutadiene (A'-1) was used in place of the polynorbornene (A-1). Observation of the cross-section of this film through an SEM revealed that the polybutadiene (A'-1) particles having a size of 1 to 5 µm were dispersed in the matrix of the EVOH (C-1). Using this film, the oxygen absorption amount, initial oxygen absorption rate, odor and haze value were measured in the same manner as in Example 3.1. The results are shown in Figure 3 and Table 3.

### (Comparative Example 3.2)

A film was obtained in the same manner as in Example 3.1 except that 10 g of the polybutadiene (A'-1) was used in place of the polynorbornene (A-1) and the amount of the EVOH (C-1) was 90 g. Observation of the cross-section of this film through an SEM revealed that the polybutadiene (A'-1) particles having a size of 1 to 5 µm were dispersed in the matrix of the EVOH (C-1). Using this film, the oxygen absorption amount, initial oxygen absorption rate, odor and haze value were measured in the same manner as in Example 3.1. The results are shown in Figure 3 and Table 3.

### (Comparative Example 3.3)

A film was obtained in the same manner as in Example 3.1 except that the polybutadiene (A'-1) was used in place of the polynorbornene (A-1), the amount of the EVOH (C-1) was 93 g, and the compatibilizer (D-1) was used in an amount of 2 g. Observation of the cross-section of this film through an SEM revealed that the polybutadiene (A'-1) particles having a size of 1 to 2 µm were dispersed in the form of in the matrix of the EVOH (C-1). Using this film, the oxygen absorption amount, initial oxygen absorption rate, odor and haze value were measured in the same manner as in Example 3.1. The results are shown in Figure 3 and Table 3.

### (Comparative Example 3.4)

A film was obtained in the same manner as in Example 3.1 except that the polybutadiene (A'-1) was used in place of the polynorbornene (A-1) and the polyethylene (C-2) was used in place of the EVOH (C-1). Observation of the cross-section of this film through an SEM revealed that the polybutadiene (A'-1) particles having a size of 1 to 5 µm were dispersed in the matrix of the polyethylene resin (C-2). Using this film, the oxygen absorption amount, initial oxygen absorption rate, odor and haze value were measured in the same manner as in Example 3.1. The results are shown in Figure 3 and Table 3.

### (Comparative Example 3.5)

A film was obtained in the same manner as in Example 3.1 except that the styrene-isoprene-styrene triblock copolymer (A'-4) was used in place of the polynorbornene (A-1). Observation of the cross-section of this film through an SEM revealed that the copolymer (A'-4) particles having a size of 1 to 2 µm were dispersed in the matrix of the EVOH (C-1). Using this film, the oxygen absorption amount, initial oxygen absorption rate, odor and haze value were measured in the same manner as in Example 3.1. The results are shown in Figure 3 and Table 3.

### (Comparative Example 3.6)

A film was obtained in the same manner as in Example 3.1 except that mix-polybutadiene ("Nipol BR1242" manufactured by ZEON CORPORATION, 1,4-/1,2-butadinene = 87.5/12.5, hereinafter referred to as polybutadiene (A'-7)) was used in place of the polynorbornene (A-1). Observation of the cross-section of this film through an SEM revealed that the polybutadiene (A'-7) particles having a size of 1 to 5 µm were dispersed in the matrix of the EVOH (C-1). Using this film, the oxygen absorption amount, initial oxygen absorption rate, odor and haze value were measured in the same manner as in Example 3.1. The results are shown in Figure 3 and Table 3.

**Table 3**

| | Thermoplastic resin (A) | Matrix resin (C) | Compatibilizer (D) | A/C/D*¹ | Oxygen absorption amount (ml/g)*² | | | | Initial oxygen absorption rate (molO₂/molC·day)*² | Odor | Haze Value *³ |
|---|---|---|---|---|---|---|---|---|---|---|---|
| | | | | | 1 Day | 6 Days | 10 Days | 14 Days | | | |
| Example 3.1 | A-1 | C-1 | - | 5/95/0 | 7.5 | 8.2 | 8.6 | 9.5 | 0.21 | ⊚ | 0.9 |
| Example 3.2 | A-1 | C-1 | D-1 | 5/93/2 | 6.0 | 7.2 | 8.6 | 12.8 | 0.17 | ⊚ | 1.2 |
| Example 3.3 | A-1 | C-1 | D-1 | 8/90/2 | 14.3 | 15.5 | 15.9 | 16.1 | 0.25 | ⊚ | |
| Example 3.4 | A-1 | C-2 | - | 10/90/0 | 18.2 | 20.1 | 27.5 | 30.1 | 0.51 | ⊚ | |
| Comparative Example 3.1 | A'-1 | C-1 | - | 5/95/0 | 1.7 | 3.0 | 4.8 | 6.9 | 0.03 | ⊚ | × |
| Comparative Example 3.2 | A'-1 | C-1 | - | 10/90/0 | 1.5 | 3.1 | 6.2 | 11.0 | 0.01 | ⊚ | × |
| Comparative Example 3.3 | A'-1 | C-1 | D-1 | 5/93/2 | 2.5 | 8.2 | 9.6 | 10.4 | 0.04 | ⊚ | 17.4 |
| Comparative Example 3.4 | A'-1 | C-2 | - | 5/95/0 | 2.2 | 4.0 | 5.1 | 8.2 | 0.04 | ○ | × |
| Comparative Example 3.5 | A'-4 | C-1 | - | 5/95/0 | 1.8 | 5.7 | 8.5 | 12.4 | 0.04 | × | |
| Comparative Example 3.6 | A'-7 | C-1 | - | 5/95/0 | 2.4 | 3.9 | 5.3 | 7.6 | 0.04 | Δ | × |

| | | | | | | | | | | | |
|---|---|---|---|---|---|---|---|---|---|---|---|
| *1: Weight ratio of thermoplastic resin (A) to matrix resin (C) to compatibilizer (D) *2: Result of measurement at 23° C in 100%RH *3: × indicates that measurement could not be performed, and a blank space indicates that no measurement was performed. | | | | | | | | | | | |

According to the present invention, an oxygen-absorbing resin composition that has excellent oxygen absorbency, does not generate an unpleasant odor as a result of oxygen absorption and has excellent transparency can be obtained. Using the resin composition having excellent oxygen absorbency, a variety of molded products containing the resin composition and having high oxygen absorbency, such as multilayered films and multilayered containers having a layer made of the resin composition, can be produced. Such molded products, e.g., multilayered films and multilayered containers, are preferable for use as containers for storing for a long period of time articles such as foods and cosmetics that are susceptible to degradation by oxygen and whose flavor is important. Furthermore, the oxygen-absorbing resin composition of the present invention has high oxygen absorbing function and thus is useful as an easyr-to-harldle oxygen absorbent.
Figure 1 is a graph in which the oxygen absorption amounts of the films of Examples 1.1 and 1.2 and Comparative Examples 1.1, 1.2 and 1.4 are plotted against time.
Figure 2 is a graph in which the oxygen absorption amounts of the films of Examples 2.1 and 2.2 and Comparative Examples 2.1 to 2.4 in a 100%RH atmosphere at 23°C are plotted against time.
Figure 3 is a graph in which the oxygen absorption amounts of the films of Examples 3.1 to 3.4 and Comparative Examples 3.1 to 3.6 in a 100%RH atmosphere at 23°C are plotted against time.

## Claims

1. An oxygen-absorbing resin composition comprising a thermoplastic resin (A) having a structural unit represented by formula (I) below and a transition metal salt (B): 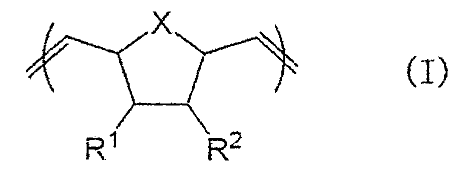 wherein X is a methylene group or an oxygen atom, R¹ and R² each independently represent a hydrogen atom, an alkyl group that may be substituted, an alkenyl group that may be substituted, an aryl group that may be substituted, an alkylaryl group that may be substituted, -ODOR³ (R³ represents a hydrogen atom or an alkyl group having 1 to 10 carbon atoms), a cyano group or a halogen atom, or R¹ and R² are taken together to form a single bond, an alkylene group that may be substituted, an oxyalkylene group or an alkenylene group.

2. The oxygen-absorbing resin composition of claim 1, wherein the thermoplastic resin (A) is polynorbornene.

3. The oxygen-absorbing resin composition of claim 1 or claim 2, wherein the transition metal salt (B) is at least one metal salt selected from the group consisting of an iron salt, a nickel salt, a copper salt, a manganese salt and a cobalt salt.

4. The oxygen-absorbing resin composition of any one of claims 1 to 3 further comprising a matrix resin (C).

5. The oxygen-absorbing resin composition of claim 4, wherein particles of the thermoplastic resin (A) are dispersed in the matrix of the matrix resin (C).

6. The oxygen-absorbing resin composition of claim 4 or 5, wherein the thermoplastic resin (A) is contained in a ratio of 30 to 1 wt% and the matrix resin (C) is contained in a ratio of 70 to 99 wt%, when the total weight of the thermoplastic resin (A) and the matrix resin (C) is determined to be 100 wt%.

7. The oxygen-absorbing resin composition of any one of claims 4 to 6, wherein the matrix resin (C) is a gas barrier resin (C-1) having an oxygen transmission rate of 500 ml-20 µm/(m²·day·atm) (20°C, 65%RH) or less.

8. The oxygen-absorbing resin composition of claim 7, wherein the gas barrier resin (C-1) is an ethylene-vinyl alcohol copolymer having an ethylene content of 5 to 60 mol% and a degree of saponification of 90% or more.

9. The oxygen-absorbing resin composition of any one of claims 4 to 8 further comprising a compatibilizer (D).

10. The oxygen-absorbing resin composition of claim 9, wherein the thermoplastic resin (A) is contained in a ratio of 29.9 to 1 wt%, the matrix resin (C) is contained in a ratio of 70 to 98.9 wt% and the compatibilizer (D) is contained in a ratio of 29 to 0.1 wt%, when the total weight of the thermoplastic resin (A), the matrix resin (C) and the compatibilizer (D) is determined to be 100 wt%.

11. A molded product comprising the oxygen-absorbing resin composition of any one of claims 1 to 10.

## Patentansprüche

1. Eine sauerstoffabsorbierende Harzzusammensetzung, umfassend ein thermoplastisches Harz (A), das eine Struktureinheit, dargestellt durch folgende Formel (I), und ein Übergangsmetallsalz (B) aufweist: 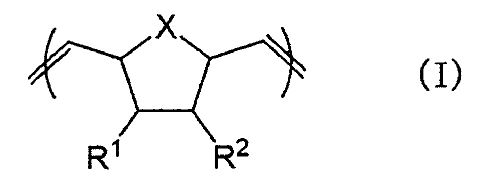 wobei X eine Methylengruppe oder ein Sauerstoffatom ist, R¹ und R² jeweils unabhängig voneinander ein Wasserstoffatom, einen Alkylrest, der substituiert sein kann, einen Alkenylrest, der substituiert sein kann, einen Arylrest, der substituiert sein kann, einen Alkylarylrest, der substituiert sein kann, -OCOR³ (wobei R³ ein Wasserstoffatom oder einen Alkylrest mit 1 bis 10 Kohlenstoffatomen darstellt), eine Cyanogruppe oder ein Halogenatom darstellen, oder R¹ und R² zusammen eine Einfachbindung, einen Alkylenrest, der substituiert sein kann, einen Oxyalkylenrest oder einen Alkenylenrest bilden.

2. Die sauerstoffabsorbierende Harzzusammensetzung gemäß Anspruch 1, wobei das thermoplastische Harz (A) Polynorbomen ist.

3. Die sauerstoffabsorbierende Harzzusammensetzung gemäß Anspruch 1 oder Anspruch 2, wobei das Übergangsmetallsalz (B) mindestens ein Metallsalz, ausgewählt aus der Gruppe bestehend aus einem Eisensalz, einem Nickelsalz, einem Kupfersalz, einem Mangansalz und einem Cobaltsalz, ist.

4. Die sauerstoffabsorbierende Harzzusammensetzung gemäß einem der Ansprüche 1 bis 3, ferner umfassend ein Matrixharz (C).

5. Die sauerstoffabsorbierende Harzzusammensetzung gemäß Anspruch 4, wobei Teilchen des thermoplastischen Harzes (A) in der Matrix des Matrixharzes (C) dispergiert sind.

6. Die sauerstoffabsorbierende Harzzusammensetzung gemäß Anspruch 4 oder 5, wobei das thermoplastische Harz (A) in einem Anteil von 30 bis 1 Gew.-% enthalten ist und das Matrixharz (C) in einem Anteil von 70 bis 99 Gew.-% enthalten ist, wenn das Gesamtgewicht des thermoplastischen Harzes (A) und des Matrixharzes (C) als 100 Gew.-% festgelegt ist.

7. Die sauerstoffabsorbierende Harzzusammensetzung gemäß einem der Ansprüche 4 bis 6, wobei das Matrixharz (C) ein Gas-Barriere-Harz (C-1) mit einer Sauerstoff-Durchlassrate von 500 ml·20 µm/(m²·Tag·atm) (20°C, 65%RH) oder weniger ist.

8. Die sauerstoffabsorbierende Harzzusammensetzung gemäß Anspruch 7, wobei das Gas-Barriere-Harz (C-1) ein Ethylen-Vinylalkohol Copolymer ist, das einen Ethylengehalt von 5 bis 60 mol% und einen Grad der Verseifung von 90% oder mehr aufweist.

9. Die sauerstoffabsorbierende Harzzusammensetzung gemäß einem der Ansprüche 4 bis 8, ferner umfassend einen Verträglichkeitsmacher (D).

10. Die sauerstoffabsorbierende Harzzusammensetzung gemäß Anspruch 9, wobei das thermoplastische Harz (A) in einem Anteil von 29,9 bis 1 Gew.-% enthalten ist, das Matrixharz (C) in einem Anteil von 70 bis 98,9 Gew.-% enthalten ist und der Verträglichkeitsmacher (D) in einem Anteil von 29 bis 0,1 Gew.% enthalten ist, wenn das Gesamtgewicht des thermoplastischen Harzes (A), des Matrixharzes (C) und des Verträglichkeitsmachers (D) als 100 Gew.-% festgelegt ist.

11. Ein geformtes Produkt, umfassend die sauerstoffabsorbierende Harzzusammensetzung gemäß einem der Ansprüche 1 bis 10.

## Revendications

1. Composition de résine absorbant l'oxygène comprenant une résine thermoplastique (A) ayant une unité structurale représentée par la formule (I) ci-dessous et un sel de métal de transition (B) : 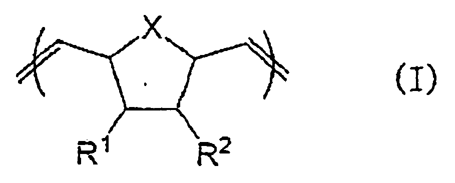 formule dans laquelle X représente un groupe méthylène ou un atome d'oxygène, R¹ et R² représentent chacun indépendamment un atome d'hydrogène, un groupe alkyle qui peut être substitué, un groupe alcényle qui peut être substitué, un groupe aryle qui peut être substitué, un groupe alkylaryle qui peut être substitué, un groupe -OCOR³ (R³ représente un atome d'hydrogène ou un groupe alkyle comportant de 1 à 10 atomes de carbone), un groupe cyano ou un atome d'halogène, ou R¹ et R² s'associent pour former une liaison simple, un groupe alkylène qui peut être substitué, un groupe oxyalkylène ou un groupe alcénylène.

2. Composition de résine absorbant l'oxygène selon la revendication 1, dans laquelle la résine thermoplastique (A) est du polynorbornène.

3. Composition de résine absorbant l'oxygène selon la revendication 1 ou la revendication 2, dans laquelle le sel de métal de transition (B) est au moins un sel de métal choisi dans le groupe constitué d'un sel de fer, d'un sel de nickel, d'un sel de cuivre, d'un sel de manganèse et d'un sel de cobalt.

4. Composition de résine absorbant l'oxygène selon l'une quelconque des revendications 1 à 3 comprenant en outre une résine de matrice (C).

5. Composition de résine absorbant l'oxygène selon la revendication 4, dans laquelle les particules de la résine thermoplastique (A) sont dispersées dans la matrice de la résine de matrice (C).

6. Composition de résine absorbant l'oxygène selon la revendication 4 ou 5, dans laquelle la résine thermoplastique (A) est présente dans un rapport de 30 à 1 % en poids et la résine de matrice (C) est présente dans un rapport de 70 à 99 % en poids, lorsque le poids total de la résine thermoplastique (A) et de la résine de matrice (C) est défini comme valant 100 % en poids.

7. Composition de résine absorbant l'oxygène selon l'une quelconque des revendications 4 à 6, dans laquelle la résine de matrice (C) est une résine étanche aux gaz (C-1) ayant une vitesse de transmission de l'oxygène inférieure ou égale à 500 ml·20 µm / (m²·jour·atm) (20 °C, HR 65 %).

8. Composition de résine absorbant l'oxygène selon la revendication 7, dans laquelle la résine étanche aux gaz (C-1) est un copolymère d'éthylène-alcool vinylique ayant une teneur en éthylène de 5 à 60 % en mole et un degré de saponification supérieur ou égal à 90 %.

9. Composition de résine absorbant l'oxygène selon l'une quelconque des revendications 4 à 8 comprenant en outre un agent de compatibilité (D).

10. Composition de résine absorbant l'oxygène selon la revendication 9, dans laquelle la résine thermoplastique (A) est présente dans un rapport de 29,9 à 1 % en poids, la résine de matrice (C) est présente dans un rapport de 70 à 98,9 % en poids et l'agent de compatibilité (D) est présent dans un rapport de 29 à 0,1 % en poids, lorsque le poids total de la résine thermoplastique (A), de la résine de matrice (C) et de l'agent de compatibilité (D) est défini comme valant 100 % en poids.

11. Produit moulé comprenant la composition de résine absorbant l'oxygène selon l'une quelconque des revendications 1 à 10.
